(19) Europäisches Patentamt
European Patent Office
Office européen des brevets

(11) **EP 4 050 387 A1**

(12) **EUROPEAN PATENT APPLICATION**
published in accordance with Art. 153(4) EPC

(43) Date of publication:
**31.08.2022 Bulletin 2022/35**

(21) Application number: **20879724.1**

(22) Date of filing: **15.10.2020**

(51) International Patent Classification (IPC):
***G02B 5/30*** *(2006.01)* ***B42D 25/364*** *(2014.01)*
***B42D 25/40*** *(2014.01)* ***B32B 3/18*** *(2006.01)*

(52) Cooperative Patent Classification (CPC):
**B32B 3/18; B42D 25/364; B42D 25/40; G02B 5/30**

(86) International application number:
**PCT/JP2020/038865**

(87) International publication number:
**WO 2021/079815 (29.04.2021 Gazette 2021/17)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **23.10.2019 JP 2019192972**

(71) Applicant: **Zeon Corporation**
**Tokyo 100-8246 (JP)**

(72) Inventor: **FUJINO, Yasuhide**
**Tokyo 100-8246 (JP)**

(74) Representative: **Fujimoto, Naho**
**Maiwald Patentanwalts- und Rechtsanwaltsgesellschaft mbH**
**Elisenhof**
**Elisenstraße 3**
**80335 München (DE)**

(54) **LIQUID CRYSTAL CURED LAYER TRANSFER SEAL, LIQUID CRYSTAL CURED LAYER TRANSFER MATTER, AND METHOD FOR ASSESSING AUTHENTICITY OF LIQUID CRYSTAL CURED LAYER TRANSFER SEAL**

(57) A liquid crystal cured layer transfer sticker including: a substrate; a liquid crystal cured layer in contact with the substrate through one face S1; and a pattern layer in contact with a partial area F in another face S2 of the liquid crystal cured layer, the liquid crystal cured layer being a layer obtained by curing a liquid crystal composition containing a polymerizable liquid crystal compound, the face S2 of the liquid crystal cured layer being divided by a plurality of incisions, and the pattern layer being a layer having adhesiveness or a layer having peelability.

FIG.1

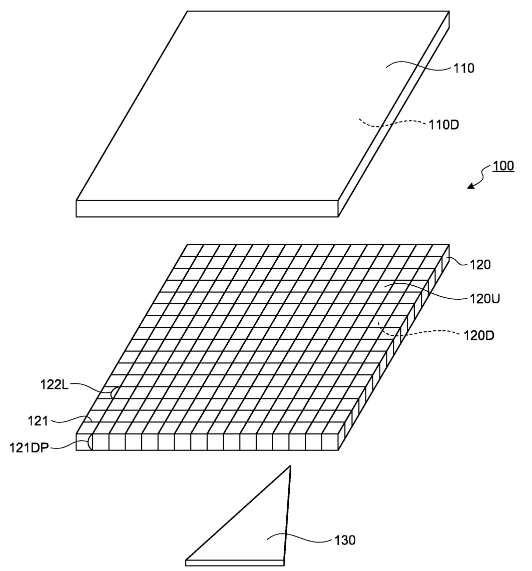


EP 4 050 387 A1

## Description

### Field

The present invention relates to a liquid crystal cured layer transfer sticker, a liquid crystal cured layer transferred article, and a method for determining the authenticity of the liquid crystal cured layer transfer sticker.

### Background

An unauthorized use prevention body including a substrate film, an authenticity determination layer adhering to the substrate film, and an adhesive layer is known (Patent Literature 1). An example of the authenticity determination layer being used is a polymer film in which an oriented state of a liquid crystal compound is fixed. By attaching the unauthorized use prevention body to an adherend and peeling off the substrate film, the polymer film is destroyed, and a certain pattern is displayed.

### Citation List

### Patent Literature

Patent Literature 1: Japanese Patent Application Laid-open No. 2002-205472 A

### Summary

### Technical Problem

A layer made by curing a liquid crystal composition containing a polymerizable liquid crystal compound (hereinafter also referred to as a liquid crystal cured layer) may be made into a layer having various functions by adjusting the type of the liquid crystal composition, the method for producing the layer, and the like. One method for forming a layer having such a function on an adherend in a pattern is a method of peeling off the liquid crystal cured layer from the substrate, pulverizing it to produce flake-shaped pigment, and printing ink containing the pigment onto the adherend. However, such a method requires complicated steps such as a peeling step and a pulverizing step.
Thus, there is a demand of transferring the liquid crystal cured layer onto the adherend in a pattern.
According to studies by the inventor of the present invention it has been found out that, when the liquid crystal cured layer is attempted to be transferred onto the adherend in a pattern, the outline of the pattern may become unclear. If the liquid crystal cured layer can be transferred onto the adherend in a pattern with a clear outline, the adherend with the liquid crystal cured layer transferred can be constituted as, e.g., an article having excellent design, and it can also prove that,.e.g., the adherend is an authentic article.
Thus, there is a demand for a liquid crystal cured layer transfer sticker that can transfer a liquid crystal cured layer onto an adherend in a pattern with a clear outline; a liquid crystal cured layer transferred article including the adherend and the liquid crystal cured layer transferred by the liquid crystal cured layer transfer sticker; and a method for determining the authenticity of the liquid crystal cured layer transfer sticker.

### Solution to Problem

The inventor of the present invention has earnestly studied to solve the aforementioned problems. Consequently, the present inventor has found out a liquid crystal cured layer transfer sticker with a specific configuration including a substrate, a liquid crystal cured layer, and a pattern layer to complete the present invention.
Specifically, the present invention provides the following:

<1> A liquid crystal cured layer transfer sticker comprising:

a substrate;
a liquid crystal cured layer in contact with the substrate through one face S1; and
a pattern layer in contact with a partial area F in another face S2 of the liquid crystal cured layer,
the liquid crystal cured layer being a layer obtained by curing a liquid crystal composition containing a polymerizable liquid crystal compound,
the face S2 of the liquid crystal cured layer being divided by a plurality of incisions, and
the pattern layer being a layer having adhesiveness or a layer having peelability.

<2> The liquid crystal cured layer transfer sticker according to claim 1, wherein a thickness d of the liquid crystal cured layer is 1 μm or more and 15 μm or less.
<3> The liquid crystal cured layer transfer sticker according to claim 1 or 2, wherein a depth of the incisions is larger than 0.5d and d or less.
<4> The liquid crystal cured layer transfer sticker according to any one of claims 1 to 3, wherein the plurality of the incisions are formed in a grid shape with one edge having a length of 5 μm or more and 100 μm or less.
<5> The liquid crystal cured layer transfer sticker according to any one of claims 1 to 4, wherein the substrate is a transparent substrate.
<6> The liquid crystal cured layer transfer sticker according to any one of claims 1 to 5, wherein the liquid crystal cured layer is a layer having cholesteric regularity.
<7> The liquid crystal cured layer transfer sticker according to claim 6, wherein retardation at a measurement wavelength of 550 nm of the substrate in an in-plane direction is 30 nm or less.
<8> The liquid crystal cured layer transfer sticker according to claim 6, wherein retardation at a measurement wavelength of 550 nm of the substrate in an in-plane direction is (550n/2 - 50) nm or more and (550n/2 + 50) nm or less, n being an odd number of 1 or more.
<9> The liquid crystal cured layer transfer sticker according to any one of claims 1 to 5, wherein retardation at a measurement wavelength of 550 nm of the liquid crystal cured layer in an in-plane direction is 100 nm or more.
<10> The liquid crystal cured layer transfer sticker according to any one of claims 1 to 9, wherein

the pattern layer is a layer having peelability, and
the liquid crystal cured layer transfer sticker further comprises an adhesive layer covering the face S2 of the liquid crystal cured layer and the pattern layer.

<11> The liquid crystal cured layer transfer sticker according to claim 10, wherein peeling strength A between the substrate and the liquid crystal cured layer, peeling strength B between the liquid crystal cured layer and the adhesive layer, peeling strength C between the pattern layer and the liquid crystal cured layer, and peeling strength D between the pattern layer and the adhesive layer satisfy the following (i) and (ii):

$$A < B \quad (i)$$

$$C < A \text{ and } D < A, \text{ or } C < A \text{ or } D < A \quad (ii).$$

<12> A falsification prevention sticker for an adherend, the falsification prevention sticker comprising the liquid crystal cured layer transfer sticker according to any one of claims 1 to 11.
<13> An authenticity determination sticker for an adherend, the authenticity determination sticker comprising the liquid crystal cured layer transfer sticker according to any one of claims 1 to 11.
<14> A liquid crystal cured layer transferred article comprising:

an adherend; and
the liquid crystal cured layer transferred to the adherend by the liquid crystal cured layer transfer sticker according to any one of claims 1 to 11.

<15> A method for determining authenticity of the liquid crystal cured layer transfer sticker according to any one of claims 6 to 8, the pattern layer being a layer having peelability, the liquid crystal cured layer transfer sticker further comprising an adhesive layer covering the face S2 of the liquid crystal cured layer and the pattern layer, and the substrate being a transparent substrate, the method comprising:

Step (A1) of attaching the liquid crystal cured layer transfer sticker to an adherend and peeling off the substrate from the attached liquid crystal cured layer transfer sticker to separate the liquid crystal cured layer transfer sticker into a first member including the substrate and the partial area F of the liquid crystal cured layer and a second member including the adhesive layer adhering to the adherend and an area G that is other than the partial area F of the liquid crystal cured layer;
Step (A2) of observing the area G of the second member without through the first member to acquire color information C2a of the area G;
Step (A3) of overlaying the first member on the second member such that at least a portion of the area F overlaps the area G when viewed in a thickness direction with the substrate set as an observation side and observing

the area G from the substrate side of the first member to acquire color information C3a of the area G; and
Step (A4) of comparing the color information C2a of the area G acquired at Step (A2) and the color information C3a of the area G acquired at Step (A3) with each other and determining that the liquid crystal cured layer transfer sticker is authentic when there is a difference between the color information C2a and the color information C3a and determining that the liquid crystal cured layer transfer sticker is not authentic when there is no difference between the color information C2a and the color information C3a.

<16> A method for determining authenticity of the liquid crystal cured layer transfer sticker according to claim 8, the pattern layer being a layer having peelability, the liquid crystal cured layer transfer sticker further comprising an adhesive layer covering the face S2 of the liquid crystal cured layer and the pattern layer, and the substrate being a transparent substrate, the method comprising:

Step (A1) of attaching the liquid crystal cured layer transfer sticker to an adherend and peeling off the substrate from the attached liquid crystal cured layer transfer sticker to separate the liquid crystal cured layer transfer sticker into a first member including the substrate and the partial area F of the liquid crystal cured layer and a second member including the adhesive layer adhering to the adherend and an area G that is other than the partial area F of the liquid crystal cured layer;
Step (A3) of overlaying the first member on the second member such that at least a portion of the area F overlaps the area G when viewed in a thickness direction with the substrate set as an observation side and observing the area G from the substrate side of the first member to acquire color information C3a of the area G;
Step (A5) of overlaying the first member on the second member such that at least a portion of the area F overlaps the area G when viewed in the thickness direction with the liquid crystal cured layer set as an observation side and observing the area G from the liquid crystal cured layer side of the first member to acquire color information C5a of the area G; and
Step (A6) of comparing the color information C3a of the area G acquired at Step (A3) and the color information C5a of the area G acquired at Step (A5) with each other and determining that the liquid crystal cured layer transfer sticker is authentic when there is a difference between the color information C3a and the color information C5a and determining that the liquid crystal cured layer transfer sticker is not authentic when there is no difference between the color information C3a and the color information C5a.

<17> A method for determining authenticity of the liquid crystal cured layer transfer sticker according to any one of claims 6 to 8, the pattern layer being a layer having adhesiveness, and the substrate being a transparent substrate, the method comprising:

Step (B1) of attaching the liquid crystal cured layer transfer sticker to an adherend and peeling off the substrate from the attached liquid crystal cured layer transfer sticker to separate the liquid crystal cured layer transfer sticker into a first member including the substrate and an area G that is other than the partial area F of the liquid crystal cured layer, and a second member including the pattern layer adhering to the adherend and the partial area F of the liquid crystal cured layer;
Step (B2) of observing the area F of the second member without through the first member to acquire color information C2b of the area F;
Step (B3) of overlaying the first member on the second member such that at least a portion of the area G overlaps the area F when viewed in a thickness direction with the substrate set as an observation side and observing the area F from the substrate side of the first member to acquire color information C3b of the area F; and
Step (B4) of comparing the color information C2b of the area F acquired at Step (B2) and the color information C3b of the area F acquired at Step (B3) with each other and determining that the liquid crystal cured layer transfer sticker is authentic when there is a difference between the color information C2b and the color information C3b and determining that the liquid crystal cured layer transfer sticker is not authentic when there is no difference between the color information C2b and the color information C3b.

<18> A method for determining authenticity of the liquid crystal cured layer transfer sticker according to claim 8, the pattern layer being a layer having adhesiveness, and the substrate being a transparent substrate, the method comprising:

Step (B1) of attaching the liquid crystal cured layer transfer sticker to an adherend and peeling off the substrate from the attached liquid crystal cured layer transfer sticker to separate the liquid crystal cured layer transfer sticker into a first member including the substrate and an area G that is other than the partial area F of the liquid crystal cured layer, and a second member including the pattern layer adhering to the adherend and the partial

area F of the liquid crystal cured layer;

Step (B3) of overlaying the first member on the second member such that at least a portion of the area G overlaps the area F when viewed in a thickness direction with the substrate set as an observation side and observing the area F from the substrate side of the first member to acquire color information C3b of the area F;

Step (B5) of overlaying the first member on the second member such that at least a portion of the area G overlaps the area F when viewed in the thickness direction with the liquid crystal cured layer set as an observation side and observing the area F from the liquid crystal cured layer side of the first member to acquire color information C5b of the area F; and

Step (B6) of comparing the color information C3b of the area F acquired at Step (B3) and the color information C5b of the area F acquired at Step (B5) with each other and determining that the liquid crystal cured layer transfer sticker is authentic when there is a difference between the color information C3b and the color information C5b and determining that the liquid crystal cured layer transfer sticker is not authentic when there is no difference between the color information C3b and the color information C5b.

Advantageous Effects of Invention

The present invention can provide a liquid crystal cured layer transfer sticker that can transfer a liquid crystal cured layer onto an adherend in a pattern with a clear outline; a liquid crystal cured layer transferred article including the adherend and the liquid crystal cured layer transferred by the liquid crystal cured layer transfer sticker; and a method for determining the authenticity of the liquid crystal cured layer transfer sticker.

Brief Description of Drawings

FIG. 1 is an exploded perspective view schematically illustrating a liquid crystal cured layer transfer sticker according to a first embodiment of the present invention.

FIG. 2 is a sectional view schematically illustrating the liquid crystal cured layer transfer sticker according to the first embodiment of the present invention.

FIG. 3 is a schematic view of a liquid crystal cured layer according to the first embodiment of the present invention when viewed in a thickness direction.

FIG. 4 is an exploded perspective view schematically illustrating a liquid crystal cured layer transfer sticker according to a second embodiment of the present invention.

FIG. 5 is a sectional view schematically illustrating the liquid crystal cured layer transfer sticker according to the second embodiment of the present invention.

FIG. 6 is a schematic view illustrating a method for using the liquid crystal cured layer transfer sticker according to one embodiment of the present invention.

FIG. 7 is a schematic view illustrating a method for using the liquid crystal cured layer transfer sticker according to one embodiment of the present invention.

FIG. 8 is a schematic view illustrating an example of members obtained at Step (A1) in a method according to a third embodiment of the present invention.

FIG. 9 is an illustrative view of Steps (A2) and (A3) in the method according to the third embodiment of the present invention.

FIG. 10 is an illustrative view of Step (A5) in a method according to a fourth embodiment of the present invention.

FIG. 11 is a schematic view illustrating an example of members obtained at Step (B1) in a method according to a fifth embodiment of the present invention.

FIG. 12 is a schematic view of Step (B2) in the method according to the fifth embodiment of the present invention.

FIG. 13 is an illustrative view of Step (B3) in the method according to the fifth embodiment of the present invention.

FIG. 14 is an illustrative view of Step (B5) in a method according to a sixth embodiment of the present invention.

Description of Embodiments

The following describes the present invention in detail with reference to embodiments and examples.

However, the present invention is not limited to the embodiments and the examples shown below and may be carried out in any modified manner without departing from the scope of the claims of the present invention and equivalents thereof.

In the following description, retardation Re of a layer in an in-plane direction is a value represented by Re = (nx - ny) x d, unless otherwise specified. The letter nx represents a refractive index in a direction that, among directions

perpendicular to a thickness direction of the layer (the in-plane directions), gives the largest refractive index. The letter ny represents a refractive index the direction being orthogonal to the direction of nx among the aforementioned in-plane directions of the layer. The letter d represents the thickness of the layer. The measurement wavelength is 550 nm, unless otherwise specified.

In the following description, the direction of a component being "parallel" and "orthogonal" may include errors within a range not impairing the effect of the present invention, for example, within a range of ±3°, ±2° or ±1°, unless otherwise specified.

In the following description, a "λ/2 plate" and a "λ/4 plate" include not only rigid members but also flexible members such as resin films, unless otherwise specified.

In the following description, an adhesive includes not only adhesives in a narrow sense (adhesives with a shear storage modulus at 23°C after energy ray application or heat treatment of 1 MPa to 500 MPa) but also sticky agent with a shear storage modulus at 23°C of less than 1 MPa, unless otherwise specified.

In the following description, the same components are denoted by the same symbol, and descriptions thereof may be omitted.

[1. Liquid Crystal Cured Layer Transfer Sticker]

[1.1. Structure of Liquid Crystal Cured Layer Transfer Sticker]

(First Embodiment)

A liquid crystal cured layer transfer sticker according to one embodiment of the present invention includes a substrate, a liquid crystal cured layer in contact with the substrate through one face S1, and a pattern layer in contact with a partial area F in another face S2 of the liquid crystal cured layer. The face S2 of the liquid crystal cured layer is divided by a plurality of incisions, and the pattern layer is a layer having adhesiveness or the pattern layer is a layer having peelability. The pattern layer does not cover the entire face S2 of the liquid crystal cured layer and does not exist on an area G that is other than the area F of the face S2.

FIG. 1 is an exploded perspective view schematically illustrating the liquid crystal cured layer transfer sticker according to a first embodiment of the present invention. FIG. 2 is a sectional view schematically illustrating the liquid crystal cured layer transfer sticker according to the first embodiment of the present invention. FIG. 3 is a schematic view of a liquid crystal cured layer according to the first embodiment of the present invention when viewed in a thickness direction.

As illustrated in FIGS. 1 to 3, this liquid crystal cured layer transfer sticker 100 of the present embodiment includes a substrate 110, a liquid crystal cured layer 120, and a pattern layer 130. The substrate 110 is preferably a transparent substrate. A face 120U as the one face S1 of the liquid crystal cured layer 120 is in contact with one face 110D of the substrate 110. One face 130U of the pattern layer 130 is in contact with the partial area F in a face 120D that is the other face S2 of the liquid crystal cured layer 120. The area G is an area other than the area F of the liquid crystal cured layer 120.

The face 120D of the liquid crystal cured layer 120 is divided by a plurality of incisions 121. A depth 121DP of the incisions 121 is the same as a thickness d of the liquid crystal cured layer 120. Thus, the the plurality of the incisions 121 reach the face 120U of the liquid crystal cured layer 120 to divide the face 120U.

In the liquid crystal cured layer transfer sticker 100, the depth 121DP of the incisions 121 is the same as the thickness d; however, in another embodiment, the depth 121DP of the incisions may be d or less. The depth 121DP of the plurality of the incisions is preferably 0.1d or more, more preferably 0.2d or more, even more preferably 0.3d or more, particularly preferably 0.4d or more, most preferably 0.5d or more, larger than 0.5d, 0.7d or more, or 0.8d or more, and usually d or less, for example.

With the depth 121DP of the plurality of the incisions being the aforementioned lower limit value or more, when the substrate 110 of the liquid crystal cured layer transfer sticker 100 is peeled off, the outline of a partial area of the liquid crystal cured layer 120 transferred to an adherend becomes clearer. In addition, falsification of the liquid crystal cured layer transfer sticker 100 can effectively be prevented.

The incisions 121 are formed over the entire face 120D of the liquid crystal cured layer 120 and are formed in a grid shape when viewed in the thickness direction of the liquid crystal cured layer 120. A length 122L of one edge of the grid is preferably 5 μm or more and more preferably 50 μm or more and preferably 100 μm or less and more preferably 70 μm or less. With the length 122L being the aforementioned lower limit value or more, the plurality of the incisions 121 can easily be formed in the liquid crystal cured layer 120. With the length 122L being the aforementioned upper limit value or less, when the substrate 110 of the liquid crystal cured layer transfer sticker 100 is peeled off, the outline of the partial area of the liquid crystal cured layer 120 transferred to the adherend becomes smoother. Thus, for example, when the pattern layer 130 serves as a character pattern and the transferred partial area of the liquid crystal cured layer

120 serves as a character pattern, determination of the character becomes easier. In addition, falsification of the liquid crystal cured layer transfer sticker 100 can be prevented more effectively.

In another embodiment, the plurality of the incisions 121 may be of any shape such as a shape of lines parallel to each other, a honeycomb shape, or a shape of a group of triangles when viewed in the thickness direction of the liquid crystal cured layer 120. The plurality of the incisions 121 may be formed on the entire face 120D of the liquid crystal cured layer 120 or be formed only in part of the face 120D (the surrounding area of the area F, for example).

(Second Embodiment)

The liquid crystal cured layer transfer sticker according to another embodiment of the present invention includes the substrate, the liquid crystal cured layer in contact with the substrate through the one face S1, the pattern layer in contact with the partial area F in the other face S2 of the liquid crystal cured layer, and an adhesive layer further covering the face S2 of the liquid crystal cured layer and the pattern layer. The face S2 of the liquid crystal cured layer is divided by the plurality of the incisions, and the pattern layer is a layer having peelability. The pattern layer does not cover the entire face S2 of the liquid crystal cured layer and does not exist on the area G, which is other than the area F of the face S2.

FIG. 4 is an exploded perspective view schematically illustrating the liquid crystal cured layer transfer sticker according to a second embodiment of the present invention. FIG. 5 is a sectional view schematically illustrating the liquid crystal cured layer transfer sticker according to the second embodiment of the present invention.

As illustrated in FIG. 4 and FIG. 5, this liquid crystal cured layer transfer sticker 200 of the present embodiment includes the substrate 110, the liquid crystal cured layer 120, a pattern layer 230, and an adhesive layer 240. The substrate 110 and the liquid crystal cured layer 120 have the same configuration as the substrate 110 and the liquid crystal cured layer 120 included in the liquid crystal cured layer transfer sticker 100, and thus descriptions thereof are partially omitted. The pattern layer 230 is a layer having peelability. As illustrated in FIG. 5, one face 230U of the pattern layer 230 is in contact with the partial area F of the face 120D of the liquid crystal cured layer 120. A partial area G' in one face 240U of the adhesive layer 240 is in contact with the area G, which is the area other than the area F. Another The other face 230D of the pattern layer 230 is in contact with an area F'. The area F' is an area other than the partial area G' of the face 240U of the adhesive layer 240. That is, the adhesive layer 240 covers the area G in the face 120D as the face S2 of the liquid crystal cured layer 120 and the face 230D of the pattern layer 230.

Preferably, peeling strength A between the substrate 110 and the liquid crystal cured layer 120, peeling strength B between the liquid crystal cured layer 120 and the adhesive layer 240, peeling strength C between the pattern layer 230 and the liquid crystal cured layer 120, and peeling strength D between the pattern layer 230 and the adhesive layer 240 satisfy the following (i) and (ii) .

$$A < B \quad (i)$$

$$C < A \text{ and } D < A, \text{ or } C < A \text{ or } D < A \quad (ii)$$

By satisfying the condition (i), when the liquid crystal cured layer transfer sticker 200 is attached to the adherend, and then the substrate 110 is peeled off from the liquid crystal cured layer transfer sticker 200, in a portion in which the substrate 110, the liquid crystal cured layer 120, and the adhesive layer 240 are laminated on one another in this order (that is, a portion including the area G of the liquid crystal cured layer 120), the liquid crystal cured layer 120 and the adhesive layer 240 are hard to peel off from each other, whereas the substrate 110 and the liquid crystal cured layer 120 are easily peeled off from each other.

By satisfying the condition (ii), when the liquid crystal cured layer transfer sticker 200 is attached to the adherend, and then the substrate 110 is peeled off from the liquid crystal cured layer transfer sticker 200, in a portion in which the substrate 110, the liquid crystal cured layer 120, the pattern layer 230, and the adhesive layer 240 are laminated on one another in this order (that is, a portion including the area F of the liquid crystal cured layer 120), at least either the liquid crystal cured layer 120 and the pattern layer 230 or the pattern layer 230 and the adhesive layer 240 are easily peeled off from each other, whereas the substrate 110 and the liquid crystal cured layer 120 are hard to peel off from each other.

By satisfying the conditions (i) and (ii), when the liquid crystal cured layer transfer sticker 200 is attached to the adherend, and then the substrate 110 is peeled off from the liquid crystal cured layer transfer sticker 200, the liquid crystal cured layer transfer sticker 200 can easily be separated into a first member including the substrate 110 and the area F of the liquid crystal cured layer 120 and a second member including the adhesive layer 240 adhering to the adherend and the area G of the liquid crystal cured layer 120. The pattern layer 230 may be included in the first member when C > D and be included in the second member when C < D.

By adjusting the adhesiveness of the adhesive layer 240 in accordance with the peeling strength A between

the substrate 110 and the liquid crystal cured layer 120, for example, the liquid crystal cured layer transfer sticker 200 can be made to satisfy the condition (i). Adjustment of the adhesiveness of the adhesive layer 240 may be effected by changing the type of the adhesive forming the adhesive layer 240 as appropriate, for example.

For example, by forming the pattern layer 230 with a material having peelability such as a peeling agent or a mold release agent, the liquid crystal cured layer transfer sticker 200 can be made to satisfy the condition (ii).

[1.2. Components of Liquid Crystal Cured Layer Transfer Sticker]

The following describes the components configuring the liquid crystal cured layer transfer sticker in detail. The following description of the components is applicable to each of the components of the liquid crystal cured layer transfer sticker according to the first embodiment, the liquid crystal cured layer transfer sticker according to the second embodiment, and liquid crystal cured layer transfer stickers that are the modifications thereof.

(Substrate)

The substrate is usually a film formed of a material having flexibility. The substrate is preferably a transparent substrate. The substrate being transparent usually means that the total light transmittance of the substrate is 70% or more. The total light transmittance of the substrate is usually 100% or less.

Examples of a material for forming the substrate may include thermoplastic resins. The thermoplastic resin usually contains a polymer. Examples of the polymer contained in the thermoplastic resin may include polyolefins; alicyclic structure-containing polymers; polycarbonates; polyesters such as polyethylene terephthalate; polysulfone; polyethersulfone; polystyrene; polyvinyl alcohol; cellulose acetate; polyvinyl chloride; and polymethacrylate.

Among them, alicyclic structure-containing polymers are preferred from the viewpoint of transparency, low moisture absorption property, size stability, and processability. The alicyclic structure-containing polymer is a polymer having an alicyclic structure in a main chain and/or a side chain. Examples thereof for use may include those described in Japanese Patent Application Laid-open No. 2007-057971 A.

Examples of the resin containing the alicyclic structure-containing polymer may include "ZEONOR" manufactured by ZEON CORPORATION.

For the resin, one containing one type of polymer alone may be used or one containing two or more types of polymers in combination in any ratio may be used. The resin may also contain any compounding agents so long as they do not significantly impair the effect of the present invention.

The substrate may have a single-layer structure including only one layer or have a multilayer structure including two or more layers.

The substrate may have an orientation film, for example. The orientation film may be formed of a resin containing a polymer such as polyimide, polyvinyl alcohol, polyester, polyarylate, polyamide-imide, polyetherimide, or polyamide, for example. One type of these polymers may be used alone or two or more types thereof may be used in combination in any ratio.

The substrate may be subjected to surface treatment. Examples of the surface treatment may include treatment to promote the orientation of a liquid crystal compound such as rubbing treatment, orientation film formation treatment, stretching treatment, or ion beam orientation treatment.

The substrate may be an unstretched film, which has not been stretched, or a stretched film, which has been stretched.

The substrate may be a layer having optical anisotropy or a layer having optical isotropy.

In one embodiment, the substrate has a retardation at a measurement wavelength of 550 nm in the in-plane direction of preferably 30 nm or less, more preferably 20 nm or less, even more preferably 10 nm or less, usually 0 nm or more, and possibly 0 nm.

In another embodiment, the substrate preferably has a capability of functioning as a 1/2 wavelength plate (a $\lambda/2$ plate). The substrate has a retardation at a measurement wavelength of 550 nm in the in-plane direction of preferably (550n/2 - 50) nm or more and more preferably (550n/2 - 30) nm or more and preferably (550n/2 + 50) nm or less and more preferably (550n/2 + 30) nm or less. The letter n is an odd number of 1 or more. The letter n is preferably 1 or 3 and more preferably 1.

When the substrate has a capability of functioning as the $\lambda/2$ plate, a plurality of ways to determine whether the liquid crystal cured layer transfer sticker is authentic are available, and thus falsification of the liquid crystal cured layer transfer sticker can be prevented more effectively.

The method for determining the authenticity of the liquid crystal cured layer transfer sticker will be described below.

The substrate may be of any thickness. The thickness of the substrate may be 30 $\mu$m or more and 50 $\mu$m or more, for example, and 1,000 $\mu$m or less and 500 $\mu$m or less, for example.

(Liquid Crystal Cured Layer)

The liquid crystal cured layer is a layer obtained by curing a liquid crystal composition containing a polymerizable liquid crystal compound.

The polymerizable liquid crystal compound is a liquid crystal compound that is capable of polymerizing in a liquid crystal composition while exhibiting a liquid crystal phase and become a polymer while maintaining the orientation of molecules in the liquid crystal phase. Examples of the polymerizable liquid crystal compound may include liquid crystal compounds having a polymerizable group, compounds that is capable of forming side-chain liquid crystal polymers, and disk-shaped liquid crystal compounds. Specific examples of the liquid crystal compounds having a polymerizable group may include rod-shaped liquid crystal compounds having a polymerizable group described in Japanese Patent Application Laid-open No. H11-513360 A, Japanese Patent Application Laid-open No. 2002-030042 A, Japanese Patent Application Laid-open No. 2004-204190 A, Japanese Patent Application Laid-open No. 2005-263789 A, Japanese Patent Application Laid-open No. 2007-119415 A, Japanese Patent Application Laid-open No. 2007-186430 A, and the like. Specific examples of the side-chain liquid crystal polymer compounds may include side-chain liquid crystal polymer compounds described in Japanese Patent Application Laid-open No. 2003-177242 A and the like. Examples of preferred polymerizable liquid crystal compounds by product name may include "LC242" manufactured by BASF. Specific examples of the disk-shaped liquid crystal compounds may include disk-shaped liquid crystal compounds described in Japanese Patent Application Laid-open No. H08-50206 A.

In one embodiment, the liquid crystal cured layer preferably has cholesteric regularity.

Cholesteric regularity is a structure in which the angles of molecular axes in stacking planes are shifted (twisted) as the planes are observed sequentially passing through the stacked planes, such that molecular axes in a certain plane are oriented in a constant direction, molecular axes in a subsequent plain stacking thereon are oriented in a direction shifted by a small angle with respect to that of the certain plane, and molecular axes in still another plane are oriented in a direction of a further shifted angle. That is, in a case where molecules inside a layer of a certain material have the cholesteric regularity, the molecules in a certain first plane inside the layer are arrayed such that the molecular axes are oriented in a constant direction. In the subsequent second plane stacking on the first plane inside the layer, the direction of the molecular axes shifts at a slight angle with respect to the direction of the molecular axes in the first plane. In the subsequent third plane further stacking on the second plane, the direction of the molecular axes further shifts at an angle from the direction of the molecular axes in the second plane. In this manner, the angle of the molecular axes in the planes successively shifts (twists) in the planes arranged in a stacked manner. Such a structure in which the direction of the molecular axes twists is usually a helical structure, which is an optically chiral structure.

In general, the liquid crystal cured layer having cholesteric regularity is capable of separating clockwise and counterclockwise circularly polarized light. That is, this layer has a property of allowing one circularly polarized light of clockwise circularly polarized light and counterclockwise circularly polarized light to pass therethrough, and reflecting part or the entirety of the other circularly polarized light. Reflection in the liquid crystal cured layer having cholesteric regularity reflects circularly polarized light while maintaining its chirality.

The liquid crystal cured layer having cholesteric regularity is also referred to as a cholesteric liquid crystal cured layer in the following.

The cholesteric liquid crystal cured layer preferably has a high reflectance in a reflection wavelength range wherein the one circularly polarized light among the clockwise circularly polarized light and the counterclockwise circularly polarized light is allowed to pass therethrough and at least part of the other circularly polarized light is reflected from the viewpoint of increasing the difference in color observed during authenticity determination to facilitate the determination. Specifically, the cholesteric liquid crystal cured layer preferably has a reflection wavelength range giving a reflectance of 40% or more for unpolarized light incidence.

The cholesteric liquid crystal cured layer may have a single-layer structure or have a multilayer structure of two or more layers. The number of layers included in the cholesteric liquid crystal cured layer is preferably 1 to 100 and more preferably 1 to 20 from the viewpoint of ease of production.

Examples of the method for forming the cholesteric liquid crystal cured layer may include a method of providing a layer of a cholesteric liquid crystal composition on the substrate and curing the aforementioned layer to obtain the cholesteric liquid crystal cured layer. For convenience's sake, the material referred to as the "liquid crystal composition" encompasses not only mixtures of two or more substances but also materials consisting of a single substance. The cholesteric liquid crystal composition refers to a composition in which when a liquid crystal compound contained in the liquid crystal composition is oriented, the liquid crystal compound is capable of exhibiting a liquid crystal phase having cholesteric regularity (a cholesteric liquid crystal phase).

As the cholesteric liquid crystal composition, a liquid crystal composition containing a polymerizable liquid crystal compound and further containing optional components as needed may be used. By using the polymerizable liquid crystal compound, the cholesteric liquid crystal cured layer can have high thermal stability. By polymerizing the polymerizable liquid crystal compound while exhibiting cholesteric regularity, the layer of the cholesteric liquid crystal

composition can be cured to obtain a non-liquid crystal cholesteric liquid crystal cured layer that is cured while exhibiting cholesteric regularity. As the cholesteric liquid crystal composition, those described in WO 2016/002765 may be used, for example.

As the cholesteric liquid crystal composition, it is preferable to use a composition containing one or more compounds selected from the compounds (A1) to (A10) shown below and one or more rod-shaped liquid crystal compounds selected from the compounds (B1) to (B9) shown below, and it is more preferable to use a composition containing the compound (A10) shown below and the compound (B5) shown below.

(Chemical Formula 1)

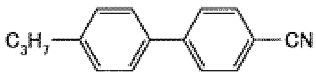
(A1)

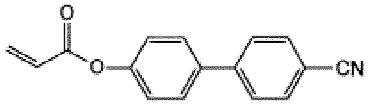
(A2)

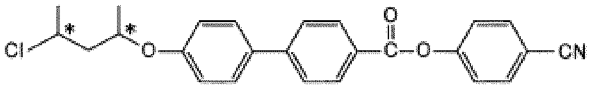
(A3)

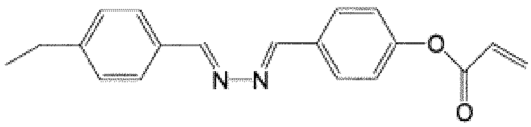
(A4)

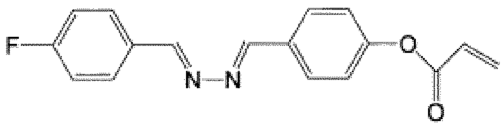
(A5)

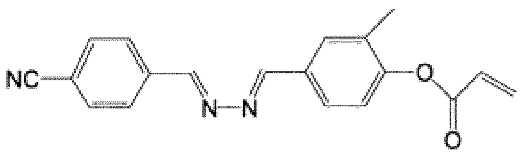
(A6)

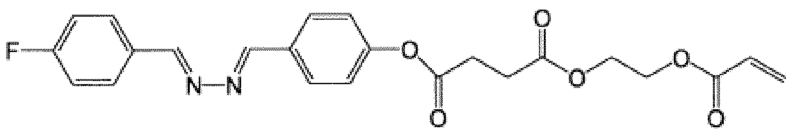
(A7)

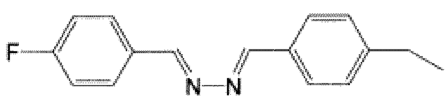
(A8)

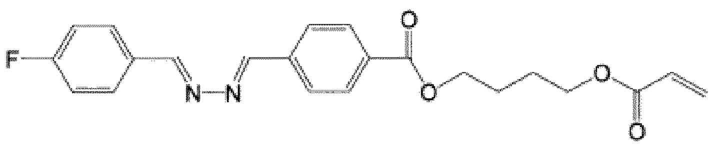
(A9)

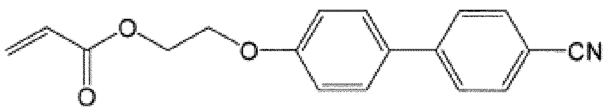
(A10)

In the aforementioned compound (A3), "*" represents a chiral center.

(Chemical Formula 2)

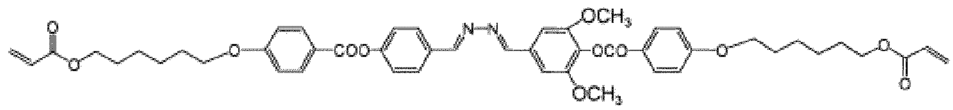
(B1)

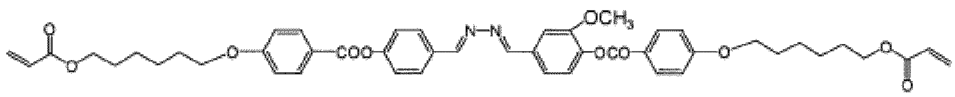
(B2)

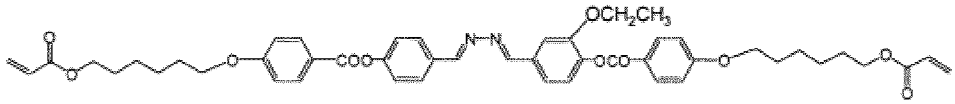
(B3)

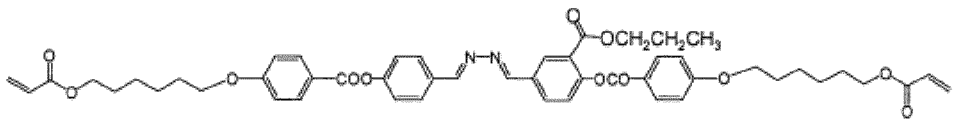
(B4)

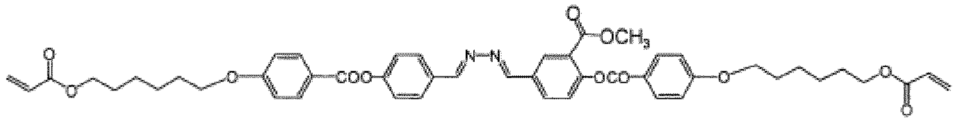
(B5)

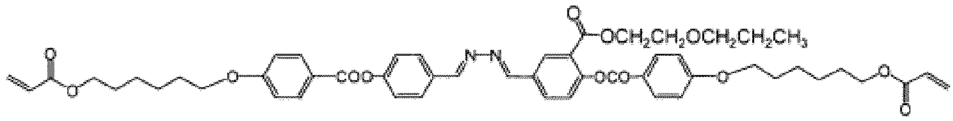
(B6)

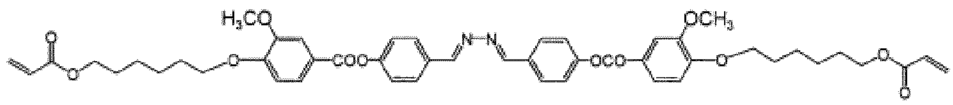
(B7)

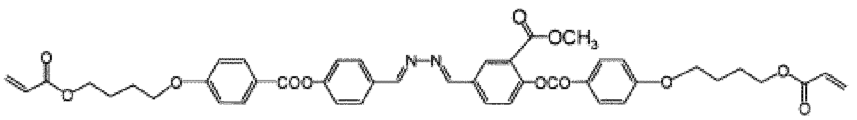
(B8)

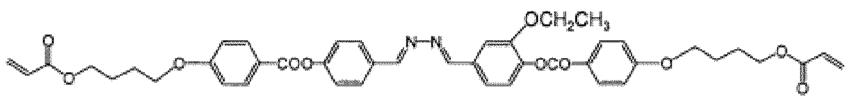
(B9)

As the method for curing the layer of the cholesteric liquid crystal composition, a method that is suitable for the component contained in the cholesteric liquid crystal composition may be selected. Usually, curing of the layer of the cholesteric liquid crystal composition is performed by polymerizing a polymerization component such as the polymerizable liquid crystal compound contained in the cholesteric liquid crystal composition. Examples of the method for polymerization may include a method of applying active energy rays and thermal polymerization. Of these, the method of applying active energy rays is preferred because it allows a polymerization reaction to proceed at room temperature. The active energy rays to be applied may include any energy rays including light such as visible rays, ultraviolet rays, and infrared rays and electron beams. The active energy rays to be applied may include any energy rays including light such as visible rays, ultraviolet rays, and infrared rays and electron beams. When the layer of the cholesteric liquid crystal composition is cured by the application of the active energy rays, the intensity of the active energy rays to be applied may be 50 $mJ/cm^2$ to 10,000 $mJ/cm^2$, for example.

After the liquid crystal compound is oriented, and before the layer of the cholesteric liquid crystal composition is cured, the layer of the cholesteric liquid crystal composition may be subjected to band broadening treatment. Such band broadening treatment may be performed by a combination of one or more pieces of active energy ray application treatment and heating treatment, for example. In this case, the energy of light to be applied may be 0.01 $mJ/cm^2$ to 50 $mJ/cm^2$, for example. The heating treatment may be performed by heating at a temperature of preferably 40°C or more and more preferably 50°C or more and preferably 200°C or less and more preferably 140°C or less, for example. By performing such band broadening treatment, the size of the pitch of the helical structure can be continuously altered at a large extent to obtain a wide reflection wavelength range.

In one embodiment, the liquid crystal cured layer may include any optional layers in addition to the aforementioned cholesteric liquid crystal cured layer. Examples of the optional layers may include an adhesive layer for attaching cholesteric liquid crystal cured layers to each other.

In another embodiment, the liquid crystal cured layer has a retardation at a measurement wavelength of 550 nm in the in-plane direction of 100 nm or more. Such a liquid crystal cured layer may be obtained by homogenously orienting the polymerizable liquid crystal compound contained in the liquid crystal composition and polymerizing the polymerizable liquid crystal compound while maintaining that orientation, for example. Homogeneously orientating the polymerizable liquid crystal compound refers to forming a layer containing the liquid crystal compound and orienting the direction of the largest refractive index in the refractive index ellipsoid of the molecules of the liquid crystal compound in the layer in a certain direction parallel to the surface of the layer.

Examples of the method for homogeneously orienting the polymerizable liquid crystal compound may include a method of applying the polymerizable liquid crystal compound onto a substrate that has been subjected to treatment to promote the orientation of the liquid crystal compound such as rubbing treatment, orientation film formation treatment, stretching treatment, or ion beam orientation treatment.

The liquid crystal cured layer may be a layer functioning as a $\lambda/2$ plate, for example. By rendering the liquid crystal cured layer a layer functioning as a $\lambda/2$ plate, the liquid crystal cured layer transfer sticker can be used for determination of the authenticity of the adherend, for example. The method for authenticity determination when the liquid crystal cured layer is the layer functioning as a $\lambda/2$ plate will be described later.

The liquid crystal cured layer may be of any thickness. The thickness of the liquid crystal cured layer may be preferably 1 $\mu$m or more and more preferably 2 $\mu$m or more or 3 $\mu$m or more and, for example, 20 $\mu$m or less, preferably 15 $\mu$m or less, and more preferably 3 $\mu$m or less.

With the thickness of the liquid crystal cured layer being the aforementioned lower limit value or more, a clockwise-and-counterclockwise circularly polarized light separation function can be enhanced when the liquid crystal cured layer is the cholesteric liquid crystal cured layer. Alternatively, the retardation of the liquid crystal cured layer in the in-plane direction can be increased. With the thickness of the liquid crystal cured layer being the aforementioned upper limit value or less, the transparency of the liquid crystal cured layer can be improved.

The method for forming the incisions in the liquid crystal cured layer is not limited to a particular method, and any publicly known method in prior art may be used.

Examples of the method may include a method of pressing a metal mold having protrusions corresponding to the incisions against the liquid crystal cured layer. The metal mold may be pressed against the liquid crystal cured layer a plurality of times to form a plurality of incisions in the liquid crystal cured layer.

When the plurality of the incisions are in a grid shape, for example, the incisions may be formed by the following method. First, a metal mold having linear ridges that are parallel to each other and are arranged at regular intervals is pressed against the liquid crystal cured layer to form a plurality of linear incisions in the liquid crystal cured layer. Then, the metal mold is placed such that the direction of the ridges of the metal mold is orthogonal to the formed linear incisions, and the metal mold is pressed against the liquid crystal cured layer. This can form a plurality of grid-shaped incisions in the liquid crystal cured layer.

(Pattern Layer)

The pattern layer is a layer having adhesiveness or a layer having peelability. The pattern layer has a patterned structure. Thus, the pattern layer does not cover the entire face S2 of the liquid crystal cured layer. The shape of the pattern is not limited to a particular shape. The shape may be any shape such as a band shape, a grid shape, a geometric shape, a character shape, or a picture shape, and may be a shape in which the same pattern is repeated or is not necessarily a shape in which the same pattern is repeated.

In one embodiment, the pattern layer is a layer having adhesiveness.

In the case wherein the pattern layer is a layer having adhesiveness, by attaching the liquid crystal cured layer transfer sticker to the adherend and then peeling off the substrate from the liquid crystal cured layer transfer sticker, a portion in which the substrate, the liquid crystal cured layer, and the pattern layer are laminated on one another in this order in the liquid crystal cured layer transfer sticker is divided into a portion including the substrate and a portion including

the liquid crystal cured layer, the pattern layer, and the adherend, as a result of attachment of the pattern layer to the adherend, and of peeling at the interface between the substrate and the liquid crystal cured layer.

The material forming the pattern layer having adhesiveness is not limited to a particular material and may be a material that is capable of adhering to the liquid crystal cured layer and the adherend. Examples of the material for forming the pattern layer having adhesiveness may include acrylic adhesives, urethane-based adhesives, rubber-based adhesives, silicone-based adhesives, polyester-based adhesives, ethylene vinyl acetate resin adhesives, polyvinyl alcohol adhesives, and polyamide adhesives. For the formation of the pattern layer having adhesiveness, materials commercially available as adhesives, sticky agents, or pressure-sensitive adhesives may be used. Examples of such commercially available products may include water-based pressure-sensitive adhesives "1549 Series" and "1555 Series" manufactured by ThreeBond Co., Ltd. The pattern layer having adhesiveness may be a layer formed of the adhesive, the sticky agent, or the pressure-sensitive adhesive.

In another embodiment, the pattern layer is a layer having peelability.

In the case wherein the pattern layer is a layer having peelability, by attaching the liquid crystal cured layer transfer sticker to the adherend via the adhesive layer and then peeling off the substrate from the liquid crystal cured layer transfer sticker, a portion in which the substrate, the liquid crystal cured layer, and the pattern layer are laminated on one another in this order in the liquid crystal cured layer transfer sticker is divided into a portion including the substrate and the liquid crystal cured layer and a portion including the adhesive layer and the adherend, as a result of peeling at the interface between the liquid crystal cured layer and the pattern layer or between the pattern layer and the adhesive layer.

The material forming the pattern layer having peelability is not limited to a particular material and may be a material easily peeling off from at least either the liquid crystal cured layer or the adhesive layer. The pattern layer may be formed of a material containing a fluororesin, wax, and/or silicones, for example. For the formation of the pattern layer having peelability, materials commercially available as mold release agents or peeling agents may be used. Examples of such commercially available products may include "KNS Series" and "KS Series" manufactured by Shin-Etsu Chemical Co., Ltd. The pattern layer having peelability may be a layer formed of the mold release agent or the peeling agent.

The thickness of the pattern layer, which is not limited to a particular thickness, is preferably 0.5 μm or more and more preferably 1 μm or more and preferably 30 μm or less and more preferably 20 μm or less. The thickness of the pattern layer may be 50% or less of the thickness d of the liquid crystal cured layer, for example. The thickness of the pattern layer is usually larger than 0% of the thickness d of the liquid crystal cured layer.

With the thickness of the pattern layer being the aforementioned lower limit value or more, the pattern layer can stably perform its function. With the thickness of the pattern layer being the aforementioned upper limit value or less, the transparency of the pattern layer can be improved.

The method for forming the pattern layer is not limited to a particular method, and examples thereof may include a method of forming incisions in the liquid crystal cured layer formed on the substrate and then applying the material for forming the pattern layer onto the face of the liquid crystal cured layer formed with the incisions to form the pattern layer, and a method of separately forming the pattern layer on a support and transferring the pattern layer from the support to the face of the liquid crystal cured layer formed with the incisions.

Examples of the method for application may include gravure printing, offset printing, screen printing, and inkjet printing.

(Adhesive Layer)

When the pattern layer is the layer having peelability, the liquid crystal cured layer transfer sticker preferably includes the adhesive layer.

The adhesive layer is a layer having adhesiveness and usually includes a layer formed of an adhesive. The adhesive may be a pressure-sensitive adhesive (a sticky agent). Examples of the adhesive may include the materials exemplified as the material for forming the pattern layer having adhesiveness.

The adhesive layer may have a single-layer structure or have a multilayer structure. The adhesive layer may have a structure ((a layer of the adhesive)/(a support)/(a layer of the adhesive)) obtained by application of the adhesive onto both faces of the support, for example.

The thickness of the adhesive layer may be any thickness. The thickness of the adhesive layer may be 0.5 μm or more and 30 μm or less, for example.

The method for forming the adhesive layer is not limited to a particular method, and examples thereof may include a method separately forming the adhesive layer and laminating the adhesive layer onto a laminate including the substrate, the liquid crystal cured layer, and the pattern layer so as to cover the liquid crystal cured layer and the pattern layer and a method applying an adhesive onto the liquid crystal cured layer and the pattern layer of the laminate and performing curing treatment as needed to obtain the adhesive layer.

[1.3. Use of Liquid Crystal Cured Layer Transfer Sticker]

By attaching the liquid crystal cured layer transfer sticker to the adherend directly or via the adhesive layer and then peeling off the substrate, the patterned liquid crystal cured layer can be transferred to the adherend. By peeling off the substrate, the patterned liquid crystal cured layer appears, and it is difficult to recreate the state of the liquid crystal cured layer before the substrate is peeled off. Accordingly, the liquid crystal cured layer transfer sticker can be used for determining the authenticity of the adherend or for preventing falsification of the adherend.

In addition, the liquid crystal cured layer transfer sticker has a specific configuration and is thus hard to counterfeit. Thus, it will be difficult to falsify the adherend and to attach a counterfeited liquid crystal cured layer transfer sticker after an authentic liquid crystal cured layer transfer sticker has been peeled off. Thus, the liquid crystal cured layer transfer sticker can prevent falsification of the adherend.

Thus, there can be provided an authenticity determination sticker including the liquid crystal cured layer transfer sticker; and a falsification prevention sticker including the liquid crystal cured layer transfer sticker.

Furthermore, as to the liquid crystal cured layer transfer sticker in which the liquid crystal cured layer is the layer having cholesteric regularity, the authenticity thereof can easily be determined without using any special viewer by, e.g., the following method. By attaching the liquid crystal cured layer transfer sticker to the adherend and then peeling the substrate off, the liquid crystal cured layer transfer sticker is divided into a first member including the substrate and a portion of the liquid crystal cured layer and a second member including another portion of the liquid crystal cured layer. Then, the first member is overlaid on the second member, and the portion of the liquid crystal cured layer included in the second member is observed. The method for determining the authenticity of the liquid crystal cured layer transfer sticker will further be described later.

The liquid crystal cured layer transfer sticker in which the liquid crystal cured layer is the layer functioning as a $\lambda/2$ plate may be used for determining the authenticity of the adherend by, e.g., the following method.

The layer having cholesteric regularity is laminated on the adherend, and, to the layer, the liquid crystal cured layer functioning as a $\lambda/2$ plate is transferred using the liquid crystal cured layer transfer sticker such that it overlaps the layer having cholesteric regularity when viewed in the thickness direction to form a laminate, for example. FIGS. 6 and 7 are schematic views illustrating a method for using the liquid crystal cured layer transfer sticker according to one embodiment of the present invention. As illustrated in FIGS. 6 and 7, a laminate 1000 is provided on an adherend 150. The laminate 1000 includes a layer 1001 having cholesteric regularity laminated on the adherend 150, the pattern layer 130 adhering to the layer 1001, and a portion 120F of the liquid crystal cured layer laminated on the pattern layer 130. The layer 1001 having cholesteric regularity is a layer that can reflect light having a clockwise rotational direction and allow to pass therethrough light having a counterclockwise rotational direction. The portion 120F of the liquid crystal cured layer functions as a $\lambda/2$ plate. The portion 120F of the liquid crystal cured layer is a layer transferred using the liquid crystal cured layer transfer sticker according to the first embodiment. However, a portion of the liquid crystal cured layer may be transferred to the layer 1001 having cholesteric regularity using the liquid crystal cured layer transfer sticker according to another embodiment.

As illustrated in the left part of FIG. 6, a circularly polarizing plate $1002_R$ is overlaid on the laminate 1000, unpolarized light $I1_{RL}$ is applied, and the layer 1001 included in the laminate 1000 is observed. The circularly polarizing plate $1002_R$ has a function of not allowing to pass therethrough the light having a counterclockwise rotational direction (hereinafter, also referred to as counterclockwise circularly polarized light) and being capable of allowing to pass therethrough the light having a clockwise rotational direction (hereinafter, also referred to as clockwise circularly polarized light). Out of the unpolarized light $I1_{RL}$ applied onto the circularly polarizing plate $1002_R$, clockwise circularly polarized light $I2_R$ passes through the circularly polarizing plate $1002_R$ to reach the layer 1001. The layer 1001 is capable of reflecting the clockwise circularly polarized light as described above, and thus the clockwise circularly polarized light $I2_R$ is reflected by the layer 1001 to become clockwise circularly polarized light $I3_R$, which reaches the circularly polarizing plate $1002_R$. The circularly polarizing plate $1002_R$ allows the clockwise circularly polarized light $I3_R$ to pass therethrough, and clockwise circularly polarized light $I4_R$ is observed.

As illustrated in the central part of FIG. 6, unpolarized light $I5_{RL}$ is applied, and the portion 120F of the liquid crystal cured layer included in the laminate 1000 is observed through the circularly polarizing plate $1002_R$. Out of the unpolarized light $I5_{RL}$, clockwise circularly polarized light $I6_R$ passes through the circularly polarizing plate $1002_R$ to reach the portion 120F. The portion 120F functions as a $\lambda/2$ plate as described above, and thus the clockwise circularly polarized light $I6_R$ is converted into counterclockwise circularly polarized light $I7_L$ by the portion 120F. The layer 1001 passes the counterclockwise circularly polarized light $I7_L$, and the counterclockwise circularly polarized light $I7_L$ is not observed as reflected light, and thus an image of the portion 120F is not observed.

Thus, when unpolarized light is applied onto the laminate 1000 and the laminate 1000 is observed through the circularly polarizing plate $1002_R$, the reflected light of the part of the layer 1001 is observed, whereas the reflected light of the portion 120F is not observed, and thus the pattern of the portion 120F is observed as a dark image.

As illustrated in the left part of FIG. 7, a circularly polarizing plate $1002_L$ is overlaid on the laminate 1000,

unpolarized light $I8_{RL}$ is applied, and the layer 1001 included in the laminate 1000 is observed. The circularly polarizing plate $1002_L$ has a function of not allowing to pass therethrough the clockwise circularly polarized light and being capable of allowing to pass therethrough the counterclockwise circularly polarized light. Out of the unpolarized light $I8_{RL}$ applied onto the circularly polarizing plate $1002_L$, counterclockwise circularly polarized light $I9_L$ passes through the circularly polarizing plate $1002_L$ to reach the layer 1001. The layer 1001 allows the counterclockwise circularly polarized light $I9_L$ to pass therethrough, and the counterclockwise circularly polarized light $I9_L$ is not observed as reflected light. Thus, the layer 1001 is observed as a dark image.

As illustrated in the central part of FIG. 7, unpolarized light $I10_{RL}$ is applied, and the portion 120F of the liquid crystal cured layer included in the laminate 1000 is observed through the circularly polarizing plate $1002_L$. Out of the unpolarized light $I10_{RL}$, counterclockwise circularly polarized light $I11_L$ passes through the circularly polarizing plate $1002_L$ to reach the portion 120F. The counterclockwise circularly polarized light $I11_L$ is converted into clockwise circularly polarized light $I12_R$ by the portion 120F, which reaches the layer 1001. The clockwise circularly polarized light $I12_R$ having reached the layer 1001 is reflected by the layer 1001 while maintaining its rotational direction, and then the rotational direction is converted to the opposite direction by the portion 120F to become counterclockwise circularly polarized light $I13_L$. The circularly polarizing plate $1002_L$ allows the counterclockwise circularly polarized light $I13_L$ to pass therethrough, and counterclockwise circularly polarized light $I14_L$ is observed.

Thus, when unpolarized light is applied onto the laminate 1000 and the laminate 1000 is observed through the circularly polarizing plate $1002_L$, the reflected light of the part of the layer 1001 is not observed, whereas the reflected light of the portion 120F is observed, and thus the pattern of the portion 120F is observed as a bright image.

As described above, when unpolarized light is applied onto the laminate 1000 and the laminate 1000 is observed through the clockwise or counterclockwise circularly polarizing plate, brightness and darkness are reversed between the case through the counterclockwise circularly polarizing plate and the case through the clockwise circularly polarizing plate. Thus, the authenticity of the adherend can be determined by whether or not the brightness and darkness of the observed image are reversed in observation of the laminate attached to the adherend through clockwise and counterclockwise circularly polarized light. Consequently, the liquid crystal cured layer transfer sticker according to one embodiment of the present invention can suitably be used to determine the authenticity of the adherend.

[2. Liquid Crystal Cured Layer Transferred Article]

A liquid crystal cured layer transferred article according to one embodiment of the present invention may include the adherend and the liquid crystal cured layer transferred to the adherend by the liquid crystal cured layer transfer sticker according to any of the embodiments described in the aforementioned item [1. Liquid Crystal Cured Layer Transfer Sticker].

In the liquid crystal cured layer transferred article, the liquid crystal cured layer having a pattern is attached to the surface of the adherend via the pattern layer having adhesiveness or the adhesive layer. Examples of the adherend, which are not limited to particular adherends, may include paper products such as banknotes and certificates; cloth products such as clothing; leather products such as bags and shoes; and their packaging.

Peeling strength E between the pattern layer having adhesiveness or the adhesive layer and the aforementioned adherend is usually larger than the peeling strength A between the substrate and the liquid crystal cured layer and is also larger than peeling strength between the liquid crystal cured layer and the pattern layer having adhesiveness or the peeling strength B between the liquid crystal cured layer and the adhesive layer. Thus, when the liquid crystal cured layer transfer sticker is attempted to be peeled off from the adherend, at least the substrate and the liquid crystal cured layer are peeled off from each other, and the liquid crystal cured layer transfer sticker is divided. Thus, it becomes more difficult to reuse the liquid crystal cured layer transfer sticker, and the falsification prevention effect of the liquid crystal cured layer transfer sticker can further be improved.

[3. Method for Determining Authenticity of Liquid Crystal Cured Layer Transfer Sticker]

[3.1. Method of Third Embodiment]

A method for determining the authenticity of a liquid crystal cured layer transfer sticker according to a third embodiment of the present invention includes Steps (A1) to (A4). Step (Al) is performed before Steps (A2) to (A4). Step (A4) is performed after Steps (A1) to (A3). Step (A3) may be performed after Step (A2), Step (A2) may be performed after Step (A3), or Step (A2) and Step (A3) may be performed simultaneously.

The method of the third embodiment may include any optional steps in addition to Steps (A1) to (A4).

The liquid crystal cured layer transfer sticker used in the method of the third embodiment includes the substrate, the liquid crystal cured layer in contact with the substrate through the one face S1, the pattern layer in contact with the partial area F in the other face S2 of the liquid crystal cured layer, and the adhesive layer covering the face S2 of the

liquid crystal cured layer and the pattern layer. The liquid crystal cured layer is a layer obtained by curing a liquid crystal composition containing a polymerizable liquid crystal compound and has cholesteric regularity, the face S2 of the liquid crystal cured layer is divided by a plurality of incisions, the pattern layer is a layer having peelability, and the substrate is a transparent substrate. Examples and preferred examples of the substrate, the liquid crystal cured layer, the pattern layer having peelability, and the adhesive layer are the same as the examples described in the aforementioned item [1. Liquid Crystal Cured Layer Transfer Sticker].

[3.1.1. Step (A1)]

At Step (A1), the liquid crystal cured layer transfer sticker is attached to the adherend, and the substrate is peeled off from the liquid crystal cured layer transfer sticker attached to the adherend to separate the liquid crystal cured layer transfer sticker into a first member and a second member.

The first member includes the substrate and the partial area F of the liquid crystal cured layer. The second member includes the adhesive layer adhering to the adherend and the area G, which is other than the partial area F of the liquid crystal cured layer.

The following describes the first member and the second member obtained at Step (A1) with reference to the drawing.

FIG. 8 is a schematic view illustrating an example of the members obtained at Step (A1) in the method according to the third embodiment of the present invention.

As illustrated in FIG. 8, this first member 360 includes the substrate 110, the portion 120F including the area F of the liquid crystal cured layer 120 laminated on a partial area of the substrate 110, and the pattern layer 230 laminated on the portion 120F.

This second member 370 includes the adhesive layer 240 adhering to the adherend 150 through a face 240D and a portion 120G including the area G of the liquid crystal cured layer 120 laminated on the partial area G' of the adhesive layer 240.

In the present embodiment, the liquid crystal cured layer 120 is a layer that has cholesteric regularity and can reflect the light having a clockwise rotational direction and allow the light having a counterclockwise rotational direction to pass therethrough. The adherend 150 is an absorbing body.

In the present embodiment, the pattern layer 230 is a layer having peelability and is constituted as being peelable from at least the adhesive layer 240, and thus by peeling off the substrate 110, the pattern layer 230 peels off from the adhesive layer 240, and the pattern layer 230 is included in the first member 360. In another embodiment, the pattern layer 230 may peel off from the portion 120F, and the pattern layer 230 may be included in the second member 370.

[3.1.2. Step (A2)]

At Step (A2), the area G of the second member is observed without through the first member to acquire color information C2a of the area G. The following describes Step (A2) with reference to FIG. 9.

FIG. 9 is an illustrative view of Steps (A2) and (A3) in the method according to the third embodiment of the present invention.

As illustrated in the right part of FIG. 9, unpolarized light $L1_{RL}$ is applied onto the second member 370 from the portion 120G side. The portion 120G of the liquid crystal cured layer can reflect the light having a clockwise rotational direction. Thus, polarized light $L2_R$ having a clockwise rotational direction included in the unpolarized light $L1_{RL}$ applied onto the portion 120G is reflected by the portion 120G.

The portion 120G of the liquid crystal cured layer can allow the light having a counterclockwise rotational direction to pass therethrough. Thus, polarized light $L3_L$ having a counterclockwise rotational direction included in the unpolarized light $L1_{RL}$ passes through the portion 120G.

Consequently, the area G is observed as an image having the color information C2a (chromaticity, saturation, and brightness, for example) that is different from that of the surrounding area of the area G.

[3.1.3. Step (A3)]

At Step (A3), the first member is overlaid on the second member such that at least a portion of the area F overlaps the area G when viewed in the thickness direction with the substrate set as an observation side, and the area G is observed from the substrate side of the first member to obtain color information C3a of the area G.

The following describes Step (A3) with reference to FIG. 9.

As illustrated in the left part of FIG. 9, the first member 360 is overlaid on the second member 370 with the substrate 110 set as an observation side. In this process, an area f, which is a portion of the area F of the portion 120F, is made to overlap the area G when viewed in the thickness direction of the first member 360. It is preferable to place

the first member 360 such that the pattern layer 230 of the first member 360 and the portion 120G of the second member 370 are in contact with each other.

Then, unpolarized light $L4_{RL}$ is applied onto the first member 360 and the second member 370 from the substrate 110 side. The portion 120F of the first member 360 can allow the light having a counterclockwise rotational direction to pass therethrough. Thus, polarized light $L5_L$ having a counterclockwise rotational direction included in the unpolarized light $L4_{RL}$ applied onto the portion 120F passes through the portion 120F.

As with the portion 120F, the portion 120G of the second member 370 can also allwo the light having a counterclockwise rotational direction to pass therethrough. Thus, the polarized light $L5_L$ passes through the portion 120G.

On the other hand, polarized light $L6_R$ having a clockwise rotational direction included in the unpolarized light $L4_{RL}$ applied onto the portion 120F is reflected by the portion 120F and does not reach the portion 120G. Thus, reflected light by the portion 120G is not observed.

Consequently, the color information C3a of the area G does not include information on the reflected light by the portion 120G, and the color information C3a observed from the area G is the same as or scarcely different from the color information of the surrounding area of the area G, making it hard for the naked eye to recognize the image of the area G.

[3.1.4 Step (A4)]

At Step (A4), the color information C2a of the area G acquired at Step (A2) and the color information C3a of the area G acquired at Step (A3) are compared with each other; if there is a difference between the color information C2a and the color information C3a, it is determined that the liquid crystal cured layer transfer sticker is authentic, whereas if there is no difference between the color information C2a and the color information C3a, it is determined that the liquid crystal cured layer transfer sticker is not authentic.

As described above, when the liquid crystal cured layer transfer sticker is authentic, the color information C2a obtained at Step (A2) includes the information on the reflected light by the portion 120G, whereas the color information C3a obtained at Step (A3) does not include the information on the reflected light of the portion 120G. Thus, there arises a difference between the color information C2a and the color information C3a. Thus, when there is a difference between the color information C2a and the color information C3a, it is determined that the liquid crystal cured layer transfer sticker is authentic.

On the other hand, when there is no difference between the color information C2a and the color information C3a, the liquid crystal cured layer transfer sticker does not have the configuration according to one embodiment of the present invention, and it is determined that the liquid crystal cured layer transfer sticker is not authentic.

[3.2. Method of Fourth Embodiment]

A method according to a fourth embodiment of the present invention is a method for determining the authenticity of a liquid crystal cured layer transfer sticker when the substrate functions as a $\lambda/2$ plate and the pattern layer is a layer having peelability.

The method for determining the authenticity of a liquid crystal cured layer transfer sticker according to the present embodiment includes Step (A1), Step (A3), Step (A5), and Step (A6). Step (A1) is performed before Step (A3), Step (A5), and Step (A6). Step (A6) is performed after Step (A1), Step (A3), and Step (A5). Step (A5) may be performed after Step (A3) or Step (A3) may be performed after Step (A5). Step (A3) and Step (A5) are usually not performed simultaneously.

The liquid crystal cured layer transfer sticker used in the method according to the present embodiment includes the substrate, the liquid crystal cured layer in contact with the substrate through the one face S1, the pattern layer in contact with the partial area F in the other face S2 of the liquid crystal cured layer, and the adhesive layer covering the face S2 of the liquid crystal cured layer and the pattern layer. The liquid crystal cured layer is a layer obtained by curing a liquid crystal composition containing a polymerizable liquid crystal compound and has cholesteric regularity, the face S2 of the liquid crystal cured layer is divided by a plurality of incisions, the pattern layer is a layer having peelability, the substrate is a transparent substrate, and the retardation at a measurement wavelength of 550 nm of the substrate in the in-plane direction is (550n/2 - 50) nm or more and (550n/2 + 50) nm or less, n being an odd number of 1 or more. Examples and preferred examples of the substrate, the liquid crystal cured layer, the pattern layer having peelability, and the adhesive layer are the same as the examples described in the aforementioned item [1. Liquid Crystal Cured Layer Transfer Sticker].

[3.2.1. Step (A1)]

At Step (A1), in the same manner as in Step (A1) according to the third embodiment, the liquid crystal cured

layer transfer sticker is attached to the adherend, and the transparent substrate is peeled off from the liquid crystal cured layer transfer sticker attached to the adherend to separate the liquid crystal cured layer transfer sticker into the first member and the second member. Step (A1) according to the fourth embodiment is the same as Step (A1) according to the third embodiment except that the liquid crystal cured layer transfer sticker is a specific liquid crystal cured layer transfer sticker in which the substrate functions as a λ/2 plate.

[3.2.2. Step (A3)]

At Step (A3), in the same manner as in Step (A3) according to the third embodiment, the first member is overlaid on the second member such that at least a portion of the area F overlaps the area G when viewed in the thickness direction with the substrate set as an observation side, and the area G is observed from the substrate side of the first member to obtain the color information C3a of the area G. Step (A3) according to the fourth embodiment is the same as Step (A3) according to the third embodiment except that the substrate is a specific substrate functioning as a λ/2 plate. The substrate functions as a λ/2 plate. Usually, when unpolarized light is applied onto the substrate, the light having passed through the substrate is unpolarized light.

Thus, as with Step (A3) according to the third embodiment, the color information C3a of the area G obtained at Step (A3) according to the fourth embodiment does not include the information on the reflected light by the portion including the area G of the liquid crystal cured layer. Thus, the color information C3a observed from the area G is the same as or scarcely different from the color information of the surrounding area of the area G, making it hard for the naked eye to recognize the image of the area G.

[3.2.3. Step (A5)]

At Step (A5), the first member is overlaid on the second member such that at least a portion of the area F overlaps the area G when viewed in the thickness direction with the liquid crystal cured layer set as an observation side, and the area G is observed from the liquid crystal cured layer side of the first member to obtain color information C5a of the area G.

The following describes Step (A5) with reference to FIG. 10.

FIG. 10 is an illustrative view of Step (A5) in the method according to the fourth embodiment of the present invention.

As illustrated in FIG. 10, the first member 360 is overlaid on the second member 370 with the portion 120F, which is a portion of the liquid crystal cured layer, set as an observation side. In this process, the area f, which is a portion of the area F of the portion 120F, is made to overlap the area G of the portion 120G, which is a portion of the liquid crystal cured layer, when viewed in the thickness direction of the first member 360. It is preferable to place the first member 360 such that the substrate 110 of the first member 360 and the portion 120G of the second member 370 are in contact with each other.

Then, unpolarized light $L7_{RL}$ is applied onto the first member 360 and the second member 370 from the portion 120F side (specifically, the pattern layer 230 side). The portion 120F of the liquid crystal cured layer can allow the light having a counterclockwise rotational direction to pass therethrough as described in the method of the third embodiment. Thus, polarized light $L8_L$ having a counterclockwise rotational direction passes through the portion 120F.

The polarized light $L8_L$ having passed through the portion 120F then passes through the substrate 110. The substrate 110 functions as a λ/2 plate. Thus, the polarized light $L8_L$ is given a phase difference when passing through the substrate 110 to become polarized light $L9_R$ having a clockwise rotational direction, which is opposite to that of the polarized light $L8_L$.

The portion 120G of the second member 370 is capable of reflecting the light having a clockwise rotational direction. Thus, the polarized light $L9_R$ is reflected by the portion 120G to become polarized light $L10_R$.

The polarized light $L10_R$ then passes through the substrate 110. The polarized light $L10_R$ is given a phase difference when passing through the substrate 110 to become polarized light $L11_L$ having a counterclockwise rotational direction, which is opposite to that of the polarized light $L10_R$. The polarized light $L11_L$ passes through the portion 120F, which is capable of allowing the light having a counterclockwise rotational direction to pass therethrough.

Consequently, the area G is observed as an image having the color information C5a different from that of the surrounding area of the area G.

[3.2.4. Step (A6)]

At Step (A6), the color information C3a of the area G acquired at Step (A3) and the color information C5a of the area G acquired at Step (A5) are compared with each other; if there is a difference between the color information C3a and the color information C5a, it is determined that the liquid crystal cured layer transfer sticker is authentic, whereas

if there is no difference between the color information C3a and the color information C5a, it is determined that the liquid crystal cured layer transfer sticker is not authentic.

As described above, when the liquid crystal cured layer transfer sticker is authentic, the color information C3a obtained at Step (A3) does not include the information on the reflected light of the portion 120G, whereas the color information C5a obtained at Step (A5) includes the information on the reflected light of the portion 120G. Thus, there arises a difference between the color information C3a and the color information C5a. Thus, when there is a difference between the color information C3a and the color information C5a, it is determined that the liquid crystal cured layer transfer sticker is authentic.

On the other hand, when there is no difference between the color information C3a and the color information C5a, the liquid crystal cured layer transfer sticker does not have the configuration according to one embodiment of the present invention, and it is determined that the liquid crystal cured layer transfer sticker is not authentic.

[3.2.5. Optional Steps]

The method according to the fourth embodiment may include any optional steps in addition to Step (A1), Step (A3), Step (A5), and Step (A6).

The method according to the fourth embodiment may include Step (A2) and Step (A4) in the method according to the third embodiment, for example. By the method according to the fourth embodiment including Step (A2) and Step (A4) in addition to Step (A1), Step (A3), Step (A5), and Step (A6), authenticity determination for the liquid crystal cured layer transfer sticker can be performed more surely.

[3.3. Method of Fifth Embodiment]

A method for determining the authenticity of a liquid crystal cured layer transfer sticker according to a fifth embodiment of the present invention includes Steps (B1) to (B4). Step (Bl) is performed before Steps (B2) to (B4). Step (B4) is performed after Steps (B1) to (B3). Step (B3) may be performed after Step (B2), Step (B2) may be performed after Step (B3), or Step (B2) and Step (B3) may be performed simultaneously.

The method of the fifth embodiment may include any optional steps in addition to Steps (B1) to (B4).

The liquid crystal cured layer transfer sticker used in the method of the fifth embodiment includes the substrate, the liquid crystal cured layer in contact with the substrate through the one face S1, and the pattern layer in contact with the partial area F in the other face S2 of the liquid crystal cured layer. The liquid crystal cured layer is a layer obtained by curing a liquid crystal composition containing a polymerizable liquid crystal compound and has cholesteric regularity, the face S2 of the liquid crystal cured layer is divided by a plurality of incisions, the pattern layer is a layer having adhesiveness, and the substrate is a transparent substrate. Examples and preferred examples of the substrate, the liquid crystal cured layer, and the pattern layer having adhesiveness are the same as the examples described in the aforementioned item [1. Liquid Crystal Cured Layer Transfer Sticker].

[3.3.1. Step (B1)]

At Step (B1), the liquid crystal cured layer transfer sticker is attached to the adherend, and the substrate is peeled off from the liquid crystal cured layer transfer sticker attached to the adherend to separate the liquid crystal cured layer transfer sticker into a first member and a second member. The first member includes the substrate and the area G, which is other than the partial area F of the liquid crystal cured layer. The second member includes the pattern layer adhering to the adherend and the partial area F of the liquid crystal cured layer.

The following describes the first member and the second member obtained at Step (B1) with reference to the drawing.

FIG. 11 is a schematic view illustrating an example of the members obtained at Step (B1) in the method according to the fifth embodiment of the present invention.

This first member 560 includes the substrate 110 and the portion 120G including the area G of the liquid crystal cured layer 120 laminated on a partial area of the substrate 110.

This second member 570 includes the portion 120F including the area F of the liquid crystal cured layer 120 and the pattern layer 130 causing the portion 120F and the adherend 150 to adhere to each other. In the present embodiment, as with the third and fourth embodiments, the liquid crystal cured layer 120 is a layer that has cholesteric regularity and is capable of reflecting the light having a clockwise rotational direction and of allowing the light having a counterclockwise rotational direction to pass therethrough. The adherend 150 is an absorbing body.

In the present embodiment, the pattern layer 130 is a layer having adhesiveness and is in contact with the partial area F of the liquid crystal cured layer 120, and thus the portion 120F including the area F of the liquid crystal cured layer 120 adheres to the adherend 150 via the pattern layer 130. On the other hand, the pattern layer 130 is not

in contact with the portion 120G including the area G, which is other than the area F of the liquid crystal cured layer 120, and thus the portion 120G does not adhere to the adherend 150.

Thus, by peeling off the substrate 110, the portion 120G including the area G of the liquid crystal cured layer 120 peels off from the adherend 150 together with the substrate 110. Thus, the portion 120G including the area G is included in the first member 560. On the other hand, the portion 120F including the area F of the liquid crystal cured layer 120 adheres to the adherend 150 through the pattern layer 130 and thus remains on the adherend 150 side, and the portion 120F peels off from the substrate 110. Thus, the portion 120F including the area F is included in the second member 570.

[3.3.2. Step (B2)]

At Step (B2), the area F of the second member is observed without intervention of the first member to acquire color information C2b of the area F. The following describes Step (B2) with reference to FIG. 12.

FIG. 12 is an illustrative view of Step (B2) in the method according to the fifth embodiment of the present invention.

As illustrated in FIG. 12, unpolarized light $L101_{RL}$ is applied onto the second member 570 from the portion 120F side. The portion 120F of the liquid crystal cured layer is capable of reflecting the light having a clockwise rotational direction. Thus, polarized light $L102_{R}$ having a clockwise rotational direction included in the unpolarized light $L101_{RL}$ applied onto the portion 120F is reflected by the portion 120F.

The portion 120F of the liquid crystal cured layer is capable of allowing the light having a counterclockwise rotational direction to pass therethrough. Thus, polarized light $L103_{L}$ having a counterclockwise rotational direction included in the unpolarized light $L101_{RL}$ passes through the portion 120F.

Consequently, the area F is observed as an image having the color information C2b (chromaticity, saturation, and brightness, for example) different from that of the surrounding area of the area F.

[3.3.3. Step (B3)]

At Step (B3), the first member is overlaid on the second member such that at least a portion of the area G overlaps the area F when viewed in the thickness direction with the substrate set as an observation side, and the area F is observed from the substrate side of the first member to obtain color information C3b of the area F.

The following describes Step (B3) with reference to FIG. 13.

FIG. 13 is an illustrative view of Step (B3) in the method according to the fifth embodiment of the present invention. As illustrated in FIG. 13, the first member 560 is overlaid on the second member 570 with the substrate 110 set as an observation side. In this process, at least a portion of the area G is made to overlap the area F when viewed in the thickness direction of the first member 560. It is preferable to place the first member 560 such that the portion 120G of the liquid crystal cured layer included in the first member 560 and the portion 120F of the second member 570 are in contact with each other.

Then, unpolarized light $L104_{RL}$ is applied onto the first member 560 and the second member 570 from the substrate 110 side. The portion 120G of the first member 560 is capable of allowing the light having a counterclockwise rotational direction to pass therethrough. Thus, polarized light $L105_{L}$ having a counterclockwise rotational direction included in the unpolarized light $L104_{RL}$ applied onto the portion 120G passes through the portion 120G.

As with the portion 120G, the portion 120F of the second member 570 is also capable of allowing the light having a counterclockwise rotational direction to pass therethrough. Thus, the polarized light $L105_{L}$ passes through the portion 120F.

On the other hand, polarized light $L106_{R}$ having a clockwise rotational direction included in the unpolarized light $L104_{RL}$ applied onto the portion 120G is reflected by the portion 120G and does not reach the portion 120F. Thus, reflected light by the portion 120F is not observed.

Consequently, the color information C3b of the area F does not include information on the reflected light by the portion 120F, and the color information C3b observed from the area F is the same as or scarcely different from the color information of the surrounding area of the area F, making it hard for the naked eye to recognize the image of the area F.

[3.3.4. Step (B4)]

At Step (B4), the color information C2b of the area F acquired at Step (B2) and the color information C3b of the area F acquired at Step (B3) are compared with each other; if there is a difference between the color information C2b and the color information C3b, it is determined that the liquid crystal cured layer transfer sticker is authentic, whereas if there is no difference between the color information C2b and the color information C3b, it is determined that the liquid crystal cured layer transfer sticker is not authentic.

As described above, when the liquid crystal cured layer transfer sticker is authentic, the color information C2b

obtained at Step (B2) includes the information on the reflected light by the portion 120F, whereas the color information C3b obtained at Step (B3) does not include the information on the reflected light of the portion 120F. Thus, there arises a difference between the color information C2b and the color information C3b. Thus, when there is a difference between the color information C2b and the color information C3b, it is determined that the liquid crystal cured layer transfer sticker is authentic.

On the other hand, when there is no difference between the color information C2b and the color information C3b, the liquid crystal cured layer transfer sticker does not have the configuration according to one embodiment of the present invention, and it is determined that the liquid crystal cured layer transfer sticker is not authentic.

[3.4. Method of Sixth Embodiment]

A method according to a sixth embodiment of the present invention is a method for determining the authenticity of a liquid crystal cured layer transfer sticker when the substrate functions as a λ/2 plate and the pattern layer is a layer having adhesiveness.

The method for determining the authenticity of a liquid crystal cured layer transfer sticker according to the present embodiment includes Step (B1), Step (B3), Step (B5), and Step (B6). Step (B1) is performed before Step (B3), Step (B5), and Step (B6). Step (B6) is performed after Step (B1), Step (B3), and Step (B5). Step (B5) may be performed after Step (B3) or Step (B3) may be performed after Step (B5). Step (B3) and Step (B5) are usually not performed simultaneously.

The liquid crystal cured layer transfer sticker used in the method according to the present embodiment includes the substrate, the liquid crystal cured layer in contact with the substrate through the one face S1, and the pattern layer in contact with the partial area F in the other face S2 of the liquid crystal cured layer. The liquid crystal cured layer is a layer obtained by curing a liquid crystal composition containing a polymerizable liquid crystal compound and has cholesteric regularity, the face S2 of the liquid crystal cured layer is divided by a plurality of incisions, the pattern layer is a layer having adhesiveness, the substrate is a transparent substrate, and the retardation at a measurement wavelength of 550 nm of the substrate in the in-plane direction is (550n/2 - 50) nm or more and (550n/2 + 50) nm or less, n being an odd number of 1 or more. Examples and preferred examples of the substrate, the liquid crystal cured layer, and the pattern layer having adhesiveness are the same as the examples described in the aforementioned item [1. Liquid Crystal Cured Layer Transfer Sticker].

[3.4.1. Step (B1)]

At Step (B1), in the same manner as in Step (B1) according to the fifth embodiment, the liquid crystal cured layer transfer sticker is attached to the adherend, and the transparent substrate is peeled off from the liquid crystal cured layer transfer sticker attached to the adherend to separate the liquid crystal cured layer transfer sticker into the first member and the second member. Step (B1) according to the sixth embodiment is the same as Step (B1) according to the fifth embodiment except that the liquid crystal cured layer transfer sticker is a specific liquid crystal cured layer transfer sticker in which the substrate functions as a λ/2 plate.

[3.4.2. Step (B3)]

At Step (B3), the first member is overlaid on the second member such that at least a portion of the area G overlaps the area F when viewed in the thickness direction with the substrate set as an observation side, and the area F is observed from the substrate side of the first member to obtain the color information C3b of the area F. Step (B3) according to the sixth embodiment is the same as Step (B3) according to the fifth embodiment except that the substrate is a specific substrate functioning as a λ/2 plate. The substrate functions as a λ/2 plate. Usually, when unpolarized light is applied onto the substrate, the light having passed through the substrate is unpolarized light.

Thus, as with Step (B3) according to the fifth embodiment, the color information C3b of the area F obtained at Step (B3) according to the sixth embodiment does not include the information on the reflected light by the portion including the area F of the liquid crystal cured layer. Thus, the color information C3b observed from the area F is the same as or scarcely different from the color information of the surrounding area of the area F, making it hard for the naked eye to recognize the image of the area F.

[3.4.3. Step (B5)]

At Step (B5), the first member is overlaid on the second member such that at least a portion of the area G overlaps the area F when viewed in the thickness direction with the liquid crystal cured layer set as an observation side, and the area F is observed from the liquid crystal cured layer side of the first member to obtain color information C5b of

the area F.

The following describes Step (B5) with reference to FIG. 14.

FIG. 14 is an illustrative view of Step (B5) in the method according to the sixth embodiment of the present invention.

As illustrated in FIG. 14, the first member 560 is overlaid on the second member 570 with the portion 120G, which is a portion of the liquid crystal cured layer, set as an observation side. In this process, at least part of the area G is made to overlap the area F when viewed in the thickness direction of the first member 560. It is preferable to place the first member 560 such that the substrate 110 of the first member 560 and the portion 120F of the second member 570 are in contact with each other.

Then, unpolarized light $L107_{RL}$ is applied onto the first member 560 and the second member 570 from the portion 120G side. The portion 120G of the liquid crystal cured layer is capable of allowing the light having a counterclockwise rotational direction to pass therethrough, as with described in the method of the fifth embodiment. Thus, polarized light $L108_L$ having a counterclockwise rotational direction passes through the portion 120G.

The polarized light $L108_L$ having passed through the portion 120G then passes through the substrate 110. The substrate 110 functions as a $\lambda/2$ plate. Thus, the polarized light $L108_L$ is given a phase difference when passing through the substrate 110 to become polarized light $L109_R$ having a clockwise rotational direction, which is opposite to that of the polarized light $L108_L$.

The portion 120F of the second member 570 is capable of reflecting the light having a clockwise rotational direction. Thus, the polarized light $L109_R$ is reflected by the portion 120F to become polarized light $L110_R$.

The polarized light $L110_R$ then passes through the substrate 110. The polarized light $L110_R$ is given a phase difference when passing through the substrate 110 to become polarized light $L111_L$ having a counterclockwise rotational direction, which is opposite to that of the polarized light L110R. The polarized light $L111_L$ passes through the portion 120G, which is capable of allowing the light having a counterclockwise rotational direction to pass therethrough.

Consequently, the area F is observed as an image having the color information C5b different from that of the surrounding area of the area F.

[3.4.4. Step (B6)]

At Step (B6), the color information C3b of the area F acquired at Step (B3) and the color information C5b of the area F acquired at Step (B5) are compared with each other; if there is a difference between the color information C3b and the color information C5b, it is determined that the liquid crystal cured layer transfer sticker is authentic, whereas if there is no difference between the color information C3b and the color information C5b, it is determined that the liquid crystal cured layer transfer sticker is not authentic.

As described above, when the liquid crystal cured layer transfer sticker is authentic, the color information C3b obtained at Step (B3) does not include the information on the reflected light of the portion 120F, whereas the color information C5b obtained at Step (B5) includes the information on the reflected light of the portion 120F. Thus, there arises a difference between the color information C3b and the color information C5b. Thus, when there is a difference between the color information C3b and the color information C5b, it is determined that the liquid crystal cured layer transfer sticker is authentic.

On the other hand, when there is no difference between the color information C3b and the color information C5b, the liquid crystal cured layer transfer sticker does not have the configuration according to one embodiment of the present invention, and it is determined that the liquid crystal cured layer transfer sticker is not authentic.

[3.4.5. Optional Steps]

The method according to the sixth embodiment may include any optional steps in addition to Step (B1), Step (B3), Step (B5), and Step (B6).

The method according to the sixth embodiment may include Step (B2) and Step (B4) in the method according to the fifth embodiment, for example. By the method according to the fifth embodiment including Step (B2) and Step (B4) in addition to Step (B1), Step (B3), Step (B5), and Step (B6), authenticity determination for the liquid crystal cured layer transfer sticker can be performed more surely.

[Examples]

In the following, the present invention will be specifically described with reference to Examples.

However, the present invention is not limited to the following Examples and may be carried out in any modified manner without departing from the scope of the claims of the present invention and equivalents thereof.

In the following description, "%" and "part(s)" representing amounts are on a weight basis, unless otherwise

specified. The operations described below were performed under normal temperature and normal pressure conditions, unless otherwise specified.

[Example Group A]

In Example Group A, liquid crystal cured layer transfer stickers including a layer configuration of (the transparent substrate)/(the cholesteric liquid crystal cured layer)/(the pattern layer having peelability)/(the adhesive layer) were produced, and a liquid crystal cured layer thereof is transferred to an adherend. Then the clarity of a transferred character pattern was evaluated.

[Example A1]

(Production of Transparent Substrate)

A resin containing an alicyclic structure-containing polymer ("ZEONOR" manufactured by ZEON CORPORATION) was fed into a feeder of a single-screw extruder (manufactured by OCS) and was melt extruded to obtain a pre-stretch film with a thickness of 200 μm. The resulting pre-stretch film was uniaxially stretched using a biaxial stretching test apparatus (manufactured by Toyo Seiki Seisaku-sho, Ltd.) to obtain a transparent substrate with a thickness of 142 μm. The conditions for uniaxial stretching are as follows:

Stretching temperature: 125°C
Stretching speed: 100 mm/min
Stretching ratio: 1.4 times

When the retardation of the transparent substrate in the in-plane direction was measured with a phase difference meter ("AxoScan" manufactured by Axometrics, Inc.), it was 268 nm at a measurement wavelength of 550 nm, revealing that it had a capability of functioning as a λ/2 plate.

(Preparation of Liquid Crystal Composition)

A photopolymerizable liquid crystal compound represented by Formula (X1) shown below, a photopolymerizable non-liquid crystal compound represented by Formula (X2) shown below, a chiral agent ("LC756" manufactured by BASF), a photopolymerization initiator ("Irgacure OXEO2" manufactured by Ciba Japan K.K.), a surfactant ("Ftargent 209F" manufactured by Neos Company Limited), and cyclopentanone as a solvent were mixed in the amounts listed in Table 1 shown below to prepare a liquid crystal composition.

(Chemical Formula 3)

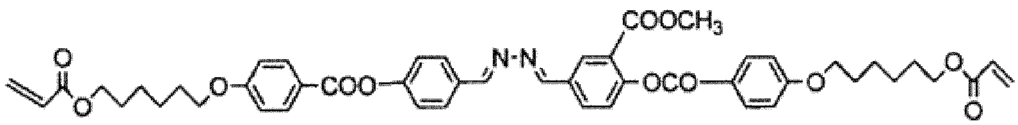

(X1)

(Chemical Formula 4)

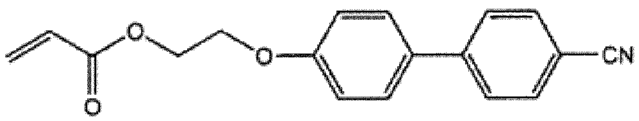

(X2)

Table 1

| | |
|---|---|
| liquid crystal compound (parts) | 21.9 |
| non-liquid crystal compound (parts) | 5.47 |

(continued)

| | |
|---|---|
| chiral agent(parts) | 1. 69 |
| photopolymerization initiator (parts) | 0.9 |
| surfactant (parts) | 0.03 |
| cyclopentanone (parts) | 70 |

(Production of Cholesteric Liquid Crystal Cured Layer (Liquid Crystal Cured Layer))

A surface of the transparent substrate was subjected to rubbing treatment. The liquid crystal composition was applied onto the face of the transparent substrate that had been subjected to the rubbing treatment using a bar coater to form a layer of the liquid crystal composition. Then, the layer of the liquid crystal composition was subjected to orientation treatment that was heating at 120°C for 4 minutes. Subsequently, application of weak ultraviolet rays of 30 $mJ/m^2$ or less and heating treatment at 100°C were repeated a plurality of times. Finally, ultraviolet rays of 800 $mJ/cm^2$ were applied onto the layer of the liquid crystal composition to cure the layer of the liquid crystal composition. Thereby a cholesteric liquid crystal cured layer was obtained as a liquid crystal cured layer. The thickness of the obtained cholesteric liquid crystal cured layer is shown in Table 2.

Reflectance when unpolarized light was made incident on the obtained cholesteric liquid crystal cured layer was measured using a UV-visible spectrophotometer ("UV-Vis 550" manufactured by JASCO Corporation). Consequently, the reflectance of the obtained cholesteric liquid crystal cured layer was 40% or more and 50% or less in the wavelength range of 450 nm or more and 750 nm or less, revealing that it had the function of separating clockwise and counterclockwise circularly polarized light in a wide band.

For the obtained multilayer film having a layer configuration of (the transparent substrate)/(the cholesteric liquid crystal cured layer), the peeling strength between the cholesteric liquid crystal cured layer and the transparent substrate was measured, and it was 0.4 N/25 mm. The peeling strength was measured by the method of the 180° peeling test, in which one layer is peeled off in a 180° direction using "Digital Force Gauge ZP-50" manufactured by Imada Co., Ltd.

(Incising into Liquid Crystal Cured Layer)

A metal mold was pressed against the cholesteric liquid crystal cured layer (the liquid crystal cured layer) side of the obtained multilayer film using a small heat pressing machine to make a plurality of incisions in the cholesteric liquid crystal cured layer. As the small heat pressing machine, "H300-10D" manufactured by As One Corporation was used. The metal mold was not heated, and incising was performed at room temperature. As the metal mold, a metal mold having a plurality of linear protrusions with an interval between adjacent ridges of 50 μm was used. The plurality of the protrusions are parallel to each other. First, the metal mold was pressed against the multilayer film such that the direction of the protrusions was parallel to the direction of one edge of the multilayer film, and then the metal mold was pressed against the multilayer film such that the direction of the protrusions was orthogonal to the direction of the one edge of the multilayer film. The pressing pressure of the metal mold was set to 0.5 MPa. Thus, grid-shaped incisions with one edge of 50 μm were made in the cholesteric liquid crystal cured layer of the multilayer film.

The depth of the incisions was measured as follows.

The multilayer film was sliced with a microtome to obtain a sample piece enabling a section of the multilayer film in the thickness direction to be observed. The obtained sample piece was observed under a scanning electron microscope (JEOL/JSM-7401F manufactured by JEOL Ltd.) to measure the depth of the incisions made in the cholesteric liquid crystal cured layer of the multilayer film.

The pressing pressure of the metal mold, the depth of the incisions, the length of one edge of the grid (the pitch of the incisions), and the value of (the depth of the incisions)/(the thickness of the cholesteric liquid crystal cured layer) are shown in Table 2.

(Formation of Pattern Layer)

On the liquid crystal cured layer of the multilayer film with the cholesteric liquid crystal cured layer (the liquid crystal cured layer) that had been subjected to incising, a character pattern was printed using a gravure printer to form a pattern layer. As ink, "KNS-3051" manufactured by Shin-Etsu Chemical Co., Ltd. was used. The thickness of the pattern layer was about 1 μm.

(Lamination of Adhesive Layer)

A pressure-sensitive adhesive layer with a peelable sheet (a layer containing an acrylic adhesive, "NE-tak PET-21WF" manufactured by Nichiei Kaken) was prepared.
The pressure-sensitive adhesive layer as an adhesive layer was attached to the side formed with the pattern layer of the multilayer film formed with the pattern layer.

(Evaluation of Liquid Crystal Cured Layer Transfer Sticker)

The peelable sheet of the pressure-sensitive adhesive layer was peeled off, and the multilayer film (the liquid crystal cured layer transfer sticker) was attached to a black acrylic plate. Then, the transparent substrate was peeled off from the multilayer film to break the multilayer film into a member (the first member) including the transparent substrate and a member (the second member) remained attached to the acrylic plate. A partial area of the cholesteric liquid crystal cured layer remained on the transparent substrate of the first member in the same pattern as the printed character-patterned pattern layer. The pattern layer adhered to the pressure-sensitive adhesive layer. A partial area of the cholesteric liquid crystal cured layer remained on the pressure-sensitive adhesive layer of the second member. The area of the cholesteric liquid crystal cured layer that remained on the second member had the same shape as that of an area of the cholesteric liquid crystal cured layer on which the character pattern was not printed. From the structures of the first member and the second member obtained, it can be seen that the peeling strength A between the transparent substrate and the cholesteric liquid crystal cured layer and the peeling strength B between the cholesteric liquid crystal cured layer and the pressure-sensitive adhesive layer are in a relation of $A < B$.
From the fact that the cholesteric liquid crystal cured layer and the pattern layer are peeled off from each other and the pattern layer adheres to the pressure-sensitive adhesive layer, it can be seen that the aforementioned peeling strength A, the peeling strength C between the cholesteric liquid crystal cured layer and the pattern layer, and the peeling strength D between the pattern layer and the pressure-sensitive adhesive layer are in a relation of $C < D < A$.
That is, it can be seen that the multilayer film (the liquid crystal cured layer transfer sticker) according to the present Example satisfies the aforementioned conditions (i) and (ii) .
When the second member was observed with the naked eye, the character pattern of the second member was able to be recognized.
Then, the first member was overlaid on the second member such that the transparent substrate side of the first member was a visual recognition side. In this process, the character pattern of the first member was made to overlap a portion of the cholesteric liquid crystal cured layer included in the second member. When the second member was observed with the naked eye from the transparent substrate side, the character pattern of the second member could not be recognized.
The outline of the area of the cholesteric liquid crystal cured layer included in the first member and the outline of the area of the cholesteric liquid crystal cured layer included in the second member were observed with the naked eye, and the clarity of the outlines was evaluated according to the following criteria.

Good: The outline of the area is the same as the outline of the printed character pattern.
Acceptable: The outline of the area is clear enough to enable recognition of the character pattern.
Bad: The outline of the area is unclear, and the character pattern cannot be recognized.

[Examples A2 to A15]

Multilayer films (liquid crystal cured layer transfer stickers) were obtained and evaluated in the same manner as in Example A1 except that the following items were changed.
In Examples A2 and A3, A5 and A6, A8 and A9, A11 and A12, and A14 and A15, the pressing pressure of the metal mold was set as listed in Table 2.
In Examples A4 to A15, the application conditions of the liquid crystal composition were adjusted so as to obtain the cholesteric liquid crystal cured layer of the thickness listed in Table 2 in (Production of Cholesteric Liquid Crystal Cured Layer (Liquid Crystal Cured Layer)).
In Examples A7 to A12, the metal mold was changed, and the pitch of the incisions was set as listed in Table 2.
In all of Examples A2 to A15, when the second member was observed with the naked eye, the character pattern of the second member was able to be recognized.
Then, the first member was overlaid on the second member such that the transparent substrate side of the first member was a visual recognition side. In this process, the character pattern of the first member was made to overlap a portion of the cholesteric liquid crystal cured layer included in the second member. When the second member was observed with the naked eye from the transparent substrate side, the character pattern of the second member could not

be recognized.

[Comparative Examples CA1 to CA3]

Multilayer films (liquid crystal cured layer transfer stickers) were obtained and evaluated in the same manner as in Example A1 except that the following items were changed.

The incising into the cholesteric liquid crystal cured layer (the liquid crystal cured layer) was not performed.

In Comparative Examples CA2 and CA3, the application conditions of the liquid crystal composition were adjusted so as to obtain the cholesteric liquid crystal cured layer of the thickness listed in Table 2 in (Production of Cholesteric Liquid Crystal Cured Layer (Liquid Crystal Cured Layer)).

The results of Example Group A were shown in Table 2.

In Table 2 shown below, the abbreviation represents the following meaning. The same applies to Table 3, Table 5, and Table 6.

d: the thickness of the liquid crystal cured layer

Depth of incisions/d: the ratio of the depth of the incisions with respect to the thickness d of the liquid crystal cured layer

Table 2

| | d (μm) | pressi ng pressu re (MPa) | depth of incisi ons (μm) | incisio n size (pitch) (μm) | outline clarity | depth of incision s/d |
|---|---|---|---|---|---|---|
| Comp. Ex. CA1 | 3 | 0 | 0 | - | Bad | - |
| Ex. A1 | 3 | 0.5 | 1.1 | 50 | Accepta ble | 0.4 |
| Ex. A2 | 3 | 1 | 1.5 | 50 | Accepta ble | 0.5 |
| Ex. A3 | 3 | 1.5 | 2.9 | 50 | Good | 1.0 |
| Comp. Ex. CA2 | 5 | 0 | 0 | - | Bad | - |
| Ex. A4 | 5 | 0.5 | 1.1 | 50 | Accepta ble | 0.2 |
| Ex. A5 | 5 | 1 | 1.5 | 50 | Accepta ble | 0.3 |
| Ex. A6 | 5 | 1.5 | 4 | 50 | Good | 0.8 |
| Ex. A7 | 5 | 0.5 | 0.9 | 10 | Accepta ble | 0.2 |
| Ex. A8 | 5 | 2 | 1.8 | 10 | Accepta ble | 0.4 |
| Ex. A9 | 5 | 3 | 4.0 | 10 | Good | 0.8 |
| Ex. A10 | 5 | 0.5 | 1.9 | 100 | Accepta ble | 0.4 |
| Ex. A11 | 5 | 1 | 3.5 | 100 | Good | 0.7 |
| Ex. A12 | 5 | 1.5 | 5 | 100 | Good | 1.0 |
| Comp. Ex. CA3 | 12 | 0 | 0 | - | Bad | - |
| Ex. A13 | 12 | 0.5 | 1 | 50 | Accepta ble | 0.1 |
| Ex. A14 | 12 | 1.5 | 4.9 | 50 | Accepta ble | 0.4 |

(continued)

| | d (μm) | pressi ng pressu re (MPa) | depth of incisi ons (μm) | incisio n size (pitch) (μm) | outline clarity | depth of incision s/d |
|---|---|---|---|---|---|---|
| Ex. A15 | 12 | 2 | 10.5 | 50 | Good | 0.9 |

[Example Group B]

In Example Group B, liquid crystal cured layer transfer stickers including a layer configuration of (the transparent substrate)/(the cholesteric liquid crystal cured layer)/(the pattern layer having adhesiveness) were produced, and the clarity of a transferred character pattern was evaluated.

[Example B1]

In the same manner as in Example A1, a multilayer film having a layer configuration of (the transparent substrate)/(the cholesteric liquid crystal cured layer) was obtained. Then, in the same manner as in Example A1, incising was performed into the liquid crystal cured layer of the obtained multilayer film to obtain a multilayer film with the cholesteric liquid crystal cured layer subjected to incising. The depth of the incisions was measured in the same manner as in Example A1. The pressing pressure of the metal mold, the depth of the incisions, the length of one edge of the grid (the pitch of the incisions), and the value of (the depth of the incisions)/(the thickness of the cholesteric liquid crystal cured layer) were shown in Table 3.

(Formation of Pattern Layer)

On the cholesteric liquid crystal cured layer (the liquid crystal cured layer) of the obtained multilayer film, a character pattern was printed using a screen printer to form a pattern layer having adhesiveness. As ink, a water-based pressure-sensitive adhesive "1549" for screen printing manufactured by ThreeBond Co., Ltd was used. The thickness of the pattern layer was 10 μm.

(Evaluation of Liquid Crystal Cured Layer Transfer Sticker)

The multilayer film (the liquid crystal cured layer transfer sticker) formed with the pattern layer was attached to a black acrylic plate. In the attaching, the face of the multilayer film formed with the pattern layer was made in close contact with the acrylic plate. Then, the transparent substrate was peeled off from the multilayer film to break the multilayer film into a member (the first member) including the transparent substrate and a member (the second member) remained attached to the acrylic plate. The second member including the printed character-patterned pattern layer and a partial area of the liquid crystal cured layer having the same pattern as that of the pattern layer attached to the acrylic plate. A partial area of the cholesteric liquid crystal cured layer remained on the transparent substrate. The area of the cholesteric liquid crystal cured layer that remained on the transparent substrate had the same shape as that of an area of the cholesteric liquid crystal cured layer on which the character pattern was not printed.

The outline of the area of the cholesteric liquid crystal cured layer included in the first member and the outline of the area of the cholesteric liquid crystal cured layer included in the second member were observed in the same manner as in Example A1, and the clarity of the outlines was evaluated according to the same criteria.

When the second member was observed with the naked eye, the character pattern was able to be recognized.

Then, the first member was overlaid on the character pattern of the second member such that the transparent substrate side was a visual recognition side. In this process, a portion of the cholesteric liquid crystal cured layer included in the first member was made to overlap the character pattern of the second member. When the second member was observed with the naked eye from the transparent substrate side, the character pattern of the second member could not be recognized.

[Examples B2 to B15]

Multilayer films (liquid crystal cured layer transfer stickers) were obtained and evaluated in the same manner as in Example B1 except that the following items were changed.

In Examples B2 and B3, B5 and B6, B8 and B9, B11 and B12, and B14 and B15, the pressing pressure of the metal mold was set as listed in Table 3.

In Examples B4 to B15, the application conditions of the liquid crystal composition were adjusted so as to obtain

the cholesteric liquid crystal cured layer of the thickness listed in Table 3 in (Production of Cholesteric Liquid Crystal Cured Layer (Liquid Crystal Cured Layer)).

In Examples B7 to B12, the metal mold was changed, and the pitch of the incisions was set as listed in Table 3.

In all of Examples B2 to B15, when the second member was observed with the naked eye, the character pattern of the second member was able to be recognized.

Then, the first member was overlaid on the character pattern of the second member such that the transparent substrate side was a visual recognition side. In this process, a portion of the cholesteric liquid crystal cured layer included in the first member was made to overlap the character pattern. When the second member was observed with the naked eye from the transparent substrate side, the character pattern of the second member could not be recognized.

[Comparative Examples CB1 to CB3]

Multilayer films (liquid crystal cured layer transfer stickers) were obtained and evaluated in the same manner as in Example B1 except that the following items were changed.

The incising into the cholesteric liquid crystal cured layer (the liquid crystal cured layer) was not performed.

In Comparative Examples CB2 and CB3, the application conditions of the liquid crystal composition were adjusted so as to obtain the cholesteric liquid crystal cured layer of the thickness listed in Table 3 in (Production of Cholesteric Liquid Crystal Cured Layer (Liquid Crystal Cured Layer)).

The results of Example Group B are shown in Table 3.

Table 3

| | d (μm) | pressin g pressur e (MPa) | depth of incisi ons (μm) | incisio n size (pitch) (μm) | outline clarity | depth of incisions /d |
|---|---|---|---|---|---|---|
| Comp. Ex. CB1 | 3 | 0 | 0 | - | Bad | - |
| Ex. B1 | 3 | 0.5 | 1.1 | 50 | Acceptab le | 0.4 |
| Ex. B2 | 3 | 1 | 1.5 | 50 | Acceptab le | 0.5 |
| Ex. B3 | 3 | 1.5 | 2.9 | 50 | Good | 1.0 |
| Comp. Ex. CB2 | 5 | 0 | 0 | - | Bad | - |
| Ex. B4 | 5 | 0.5 | 1.1 | 50 | Acceptab le | 0.2 |
| Ex. B5 | 5 | 1 | 1.5 | 50 | Acceptab le | 0.3 |
| Ex. B6 | 5 | 1.5 | 4 | 50 | Good | 0.8 |
| Ex. B7 | 5 | 0.5 | 0.9 | 10 | Acceptab le | 0.2 |
| Ex. B8 | 5 | 2 | 1.8 | 10 | Acceptab le | 0.4 |
| Ex. B9 | 5 | 3 | 4.0 | 10 | Good | 0.8 |
| Ex. B10 | 5 | 0.5 | 1.9 | 100 | Acceptab le | 0.4 |
| Ex. B11 | 5 | 1 | 3.5 | 100 | Good | 0.7 |
| Ex. B12 | 5 | 1.5 | 5 | 100 | Good | 1.0 |
| Comp. Ex. CB3 | 12 | 0 | 0 | - | Bad | - |
| Ex. B13 | 12 | 0.5 | 1 | 50 | Acceptab le | 0.1 |
| Ex. B14 | 12 | 1.5 | 4.9 | 50 | Acceptab le | 0.4 |
| Ex. B15 | 12 | 2 | 10.5 | 50 | Good | 0.9 |

[Example Group C]

In Example Group C, liquid crystal cured layer transfer stickers including a layer configuration of (the transparent

substrate)/(the liquid crystal cured layer having a phase difference in the in-plane direction)/(the pattern layer having peelability)/(the adhesive layer) were produced, and a liquid crystal cured layer thereof is transferred to an adherend. Then the clarity of a transferred character pattern was evaluated.

[Example C1]

(Production of Transparent Substrate)

A transparent substrate was produced in the same manner as in (Production of Transparent Substrate) of Example A1. The transparent substrate functioned as a $\lambda/2$ plate as with the transparent substrate produced in Example A1.

(Preparation of Liquid Crystal Composition)

A photopolymerizable liquid crystal compound ("LC242" manufactured by BASF), a photopolymerizable non-liquid crystal compound represented by Formula (X2) described above, a photopolymerization initiator ("Irgacure OXEO2" manufactured by Ciba Japan K.K.), a surfactant ("Ftargent 209F" manufactured by Neos Company Limited), and cyclopentanone as a solvent were mixed in the amounts listed in Table 4 shown below to prepare a liquid crystal composition.

Table 4

| | |
|---|---|
| liquid crystal compound (parts) | 31 |
| non-liquid crystal compound (parts) | 7.8 |
| photopolymerization initiator (parts) | 1.2 |
| surfactant (parts) | 0.04 |
| cyclopentanone (parts) | 60 |

(Production of Liquid Crystal Cured Layer)

A surface of the transparent substrate was subjected to rubbing treatment. The liquid crystal composition was applied onto the face of the transparent substrate that had been subjected to the rubbing treatment using a bar coater to form a layer of the liquid crystal composition. Then, the layer of the liquid crystal composition was subjected to orientation treatment that was heating at 120°C for 4 minutes. Ultraviolet rays of 800 mJ/cm$^2$ were applied onto the layer of the liquid crystal composition for 30 seconds to cure the layer of the liquid crystal composition. Thereby a liquid crystal cured layer was obtained. The thickness of the obtained liquid crystal cured layer was shown in Table 5.

When the retardation of the obtained liquid crystal cured layer in the in-plane direction was measured with a phase difference meter ("AxoScan" manufactured by Axometrics, Inc.), it was 140 nm at a measurement wavelength of 550 nm, revealing that the liquid crystal cured layer functioned as a $\lambda/4$ plate.

For the obtained multilayer film having a layer configuration of (the transparent substrate)/(the liquid crystal cured layer), the peeling strength between the liquid crystal cured layer and the transparent substrate was measured in the same manner as in Example A1, and it was 0.4 N/25 mm.

(Incising into Liquid Crystal Cured Layer)

A plurality of incisions were made in the liquid crystal cured layer of the obtained multilayer film in the same manner as in (Incising into Liquid Crystal Cured Layer) of Example A1. The depth of the incisions made in the liquid crystal cured layer was measured in the same manner as in Example A1.

The pressing pressure of the metal mold, the depth of the incisions, the length of one edge of the grid (the pitch of the incisions), and the value of (the depth of the incisions)/(the thickness of the liquid crystal cured layer) are shown in Table 5.

(Formation of Pattern Layer and Lamination of Adhesive Layer)

A pattern layer having peelability was formed on the liquid crystal cured layer of the multilayer film that had been subjected to incising in the same manner as in Example A1. The thickness of the pattern layer was about 1 $\mu$m. Then, a pressure-sensitive adhesive layer was attached to the multilayer film in the same manner as in Example A1.

(Evaluation of Liquid Crystal Cured Layer Transfer Sticker)

The liquid crystal cured layer transfer sticker was evaluated in the same manner as in Example A1. A partial area of the liquid crystal cured layer remained on the transparent substrate of the first member in the same pattern as the printed character-patterned pattern layer. The pattern layer adhered to a partial area of the liquid crystal cured layer. A partial area of the liquid crystal cured layer remained on the pressure-sensitive adhesive layer of the second member. The area of the liquid crystal cured layer that remained on the second member had the same shape as that of an area of the liquid crystal cured layer on which the character pattern was not printed. From the structures of the first member and the second member obtained, it can be seen that the peeling strength A between the transparent substrate and the liquid crystal cured layer and the peeling strength B between the liquid crystal cured layer and the pressure-sensitive adhesive layer are in a relation of A < B.

From the fact that the liquid crystal cured layer and the pattern layer are peeled off from each other and the pattern layer adheres to the pressure-sensitive adhesive layer, it can be seen that the aforementioned peeling strength A, the peeling strength C between the cholesteric liquid crystal cured layer and the pattern layer, and the peeling strength D between the pattern layer and the pressure-sensitive adhesive layer are in a relation of C < D < A.

That is, it can be seen that the multilayer film (the liquid crystal cured layer transfer sticker) according to the present Example satisfies the aforementioned conditions (i) and (ii) .

[Examples C2 and C3]

Multilayer films (liquid crystal cured layer transfer stickers) were obtained and evaluated in the same manner as in Example C1 except that the following items were changed.

The application conditions of the liquid crystal composition were adjusted so as to obtain the liquid crystal cured layer of the thickness listed in Table 5 in (Production of Liquid Crystal Cured Layer).

In Example C3, the pressing pressure of the metal mold was set as listed in Table 5.

When the retardation of the liquid crystal cured layer obtained in Examples C2 and C3 in the in-plane direction was measured in the same manner as in Example C1, it was 280 nm, revealing that the liquid crystal cured layer functioned as a $\lambda/2$ plate.

[Comparative Examples CC1 and CC2]

Multilayer films (liquid crystal cured layer transfer stickers) were obtained and evaluated in the same manner as in Example C1 except that the following items were changed.

The incising into the liquid crystal cured layer was not performed.

In Comparative Example CC2, the application conditions of the liquid crystal composition were adjusted so as to obtain the liquid crystal cured layer of the thickness listed in Table 5 in (Production of Liquid Crystal Cured Layer).

The results of Example Group C are shown in Table 5.

Table 5

| | d ($\mu$m) | pressi ng pressu re (MPa) | depth of incisi ons ($\mu$m) | incision size (pitch) ($\mu$m) | outline clarity | depth of incision s/d |
|---|---|---|---|---|---|---|
| Comp. Ex. CC1 | 1 | 0 | 0 | - | Bad | - |
| Ex. C1 | 1 | 0.5 | 1 | 50 | Good | 1.0 |
| Comp. Ex. CC2 | 2 | 0 | 0 | - | Bad | - |
| Ex. C2 | 2 | 0.5 | 1 | 50 | Accepta ble | 0.5 |
| Ex. C3 | 2 | 1 | 1.5 | 50 | Good | 0.8 |

[Example Group D]

In Example group D, liquid crystal cured layer transfer stickers including a layer configuration of (the transparent substrate)/(the liquid crystal cured layer having a phase difference in the in-plane direction)/(the pattern layer having

adhesiveness) were produced, and the clarity of a transferred character pattern was evaluated.

[Example D1]

In the same manner as in Example C1, a multilayer film having a layer configuration of (the transparent substrate)/(the liquid crystal cured layer) was obtained, and a plurality of incisions were made in the liquid crystal cured layer. The depth of the incisions made in the liquid crystal cured layer was measured in the same manner as in Example A1. The retardation of the liquid crystal cured layer in the in-plane direction was 140 nm at a measurement wavelength of 550 nm as with the liquid crystal cured layer in Example C1, and thus the liquid crystal cured layer can function as a $\lambda/4$ plate.
The pressing pressure of the metal mold, the depth of the incisions, the length of one edge of the grid (the pitch of the incisions), and the value of (the depth of the incisions)/(the thickness of the liquid crystal cured layer) are shown in Table 6.

(Formation of Pattern Layer)

On the liquid crystal cured layer of the multilayer film that had been subjected to incising, a pattern layer having adhesiveness was formed in the same manner as in Example B1. The thickness of the pattern layer was 10 μm.
The multilayer film (the liquid crystal cured layer transfer sticker) formed with the pattern layer was evaluated in the same manner as in Example B1.

[Examples D2 and D3]

Multilayer films (liquid crystal cured layer transfer stickers) were obtained and evaluated in the same manner as in Example D1 except that the following items were changed.
The application conditions of the liquid crystal composition were adjusted so as to obtain the liquid crystal cured layer of the thickness listed in Table 6 in (Production of Liquid Crystal Cured Layer).
In Example D3, the pressing pressure of the metal mold was set as listed in Table 6.
The retardation of the liquid crystal cured layer in the in-plane direction was 280 nm at a measurement wavelength of 550 nm, and thus the liquid crystal cured layer can function as a $\lambda/2$ plate.
When the retardation of the liquid crystal cured layer obtained in Example D2 in the in-plane direction was measured in the same manner as in Example C1, it was 280 nm, revealing that the liquid crystal cured layer functioned as a $\lambda/2$ plate.

[Comparative Examples CD1 and CD2]

Multilayer films (liquid crystal cured layer transfer stickers) were obtained and evaluated in the same manner as in Example D1 except that the following items were changed.
The incising into the liquid crystal cured layer was not performed.
In Comparative Example CD2, the application conditions of the liquid crystal composition were adjusted so as to obtain the liquid crystal cured layer of the thickness listed in Table 6 in (Production of Liquid Crystal Cured Layer).
The results of Example Group D are shown in Table 6.

Table 6

| | d (μm) | pressi ng pressu re (MPa) | depth of incisi ons (μm) | Incision size (pitch) (μm) | Outline clarity | depth of incision s/d |
|---|---|---|---|---|---|---|
| Comp. Ex. CD1 | 1 | 0 | 0 | - | Bad | - |
| Ex. D1 | 1 | 0.5 | 1 | 50 | Good | 1.0 |
| Comp. Ex. CD2 | 2 | 0 | 0 | - | Bad | - |
| Ex. D2 | 2 | 0.5 | 1 | 50 | Accepta ble | 0.5 |
| Ex. D3 | 2 | 1 | 1.5 | 50 | Good | 0.8 |

From the results described above, in the liquid crystal cured layer transfer sticker according to the Examples in which the face of the liquid crystal cured layer on the pressure-sensitive adhesive layer (the adhesive layer) side is divided by the incisions, when the transparent substrate is peeled off from the acrylic plate, which is the adherend, the outline of the printed character pattern clearly appears on the member remaining on the acrylic plate. Thus, the liquid crystal cured layer transfer sticker of the present invention is useful for transferring the liquid crystal cured layer to the adherend. In addition, the outline of the printed character pattern clearly appears, and thus it can be easily determined that the liquid crystal cured layer transfer sticker is authentic.

[Example E]

Example E shows that the liquid crystal cured layer transfer sticker obtained in Example D2 is useful as an authenticity determination sticker for the adherend.

In the same manner as in Example A1, a multilayer film with the cholesteric liquid crystal cured layer that has been subjected to incising was obtained. A pressure-sensitive adhesive layer with a peelable sheet (a layer containing an acrylic adhesive, "NE-tak PET-21WF" manufactured by Nichiei Kaken) was attached to the cholesteric liquid crystal cured layer of the obtained multilayer film.

The peelable sheet of the pressure-sensitive adhesive layer was peeled off, and the multilayer film was attached to a black acrylic plate. Then, the transparent substrate was peeled off from the multilayer film to transfer the cholesteric liquid crystal cured layer to the acrylic plate.

The liquid crystal cured layer transfer sticker obtained in Example D2 was attached to the transferred cholesteric liquid crystal cured layer. In the process of the attaching, the face of the liquid crystal cured layer transfer sticker formed with the pattern layer was made in close contact with the cholesteric liquid crystal cured layer. Then, the transparent substrate was peeled off from the liquid crystal cured layer transfer sticker to form a laminate having a layer configuration of (the acrylic plate)/(the pressure-sensitive adhesive layer)/(the cholesteric liquid crystal cured layer)/(the pattern layer having adhesiveness)/(the liquid crystal cured layer functioning as a $\lambda/2$ plate).

When unpolarized light was applied onto the laminate and observation with the naked eye was performed, the character pattern of the liquid crystal cured layer functioning as a $\lambda/2$ plate could not be recognized.

When the laminate was observed through a clockwise or counterclockwise circularly polarizing plate, the brightness and darkness of the observed character patterns were reversed. Specifically, a portion that appeared to be black when observed through a counterclockwise circularly polarizing plate appeared to be silvery when observed through a clockwise polarizing plate, whereas a portion that appeared to be silvery when observed through the counterclockwise circularly polarizing plate appeared to be black when observed through the clockwise polarizing plate.

Thus, by transferring the cholesteric liquid crystal cured layer to the adherend, which is authentic, and transferring the liquid crystal cured layer functioning as a $\lambda/2$ plate onto the cholesteric liquid crystal cured layer using the liquid crystal cured layer transfer sticker, authenticity of the adherend can be proven.

[Reference Sign List]

100: liquid crystal cured layer transfer sticker
110: substrate
110D: face
120: liquid crystal cured layer
120D: face
120F: portion
120G: portion
120U: face
121: incision
121DP: depth
130: pattern layer
130U: face
150: adherend
200: liquid crystal cured layer transfer sticker
230: pattern layer
230D: face
230U: face
240: adhesive layer

240D: face
240U: face
360: first member
370: second member
560: first member
570: second member
1000: laminate
1001: layer
1002L: circularly polarizing plate
1002R: circularly polarizing plate
F: area
F' : area
G: area
G' : area
d: thickness
f: area

**Claims**

1. A liquid crystal cured layer transfer sticker comprising:

   a substrate;
   a liquid crystal cured layer in contact with the substrate through one face S1; and
   a pattern layer in contact with a partial area F in another face S2 of the liquid crystal cured layer,
   the liquid crystal cured layer being a layer obtained by curing a liquid crystal composition containing a polymerizable liquid crystal compound,
   the face S2 of the liquid crystal cured layer being divided by a plurality of incisions, and
   the pattern layer being a layer having adhesiveness or a layer having peelability.

2. The liquid crystal cured layer transfer sticker according to claim 1, wherein a thickness d of the liquid crystal cured layer is 1 $\mu$m or more and 15 $\mu$m or less.

3. The liquid crystal cured layer transfer sticker according to claim 1 or 2, wherein a depth of the incisions is larger than 0.5d and d or less.

4. The liquid crystal cured layer transfer sticker according to any one of claims 1 to 3, wherein the plurality of the incisions are formed in a grid shape with one edge having a length of 5 $\mu$m or more and 100 $\mu$m or less.

5. The liquid crystal cured layer transfer sticker according to any one of claims 1 to 4, wherein the substrate is a transparent substrate.

6. The liquid crystal cured layer transfer sticker according to any one of claims 1 to 5, wherein the liquid crystal cured layer is a layer having cholesteric regularity.

7. The liquid crystal cured layer transfer sticker according to claim 6, wherein retardation at a measurement wavelength of 550 nm of the substrate in an in-plane direction is 30 nm or less.

8. The liquid crystal cured layer transfer sticker according to claim 6, wherein retardation at a measurement wavelength of 550 nm of the substrate in an in-plane direction is (550n/2 - 50) nm or more and (550n/2 + 50) nm or less, n being an odd number of 1 or more.

9. The liquid crystal cured layer transfer sticker according to any one of claims 1 to 5, wherein retardation at a measurement wavelength of 550 nm of the liquid crystal cured layer in an in-plane direction is 100 nm or more.

10. The liquid crystal cured layer transfer sticker according to any one of claims 1 to 9, wherein

    the pattern layer is a layer having peelability, and

the liquid crystal cured layer transfer sticker further comprises an adhesive layer covering the face S2 of the liquid crystal cured layer and the pattern layer.

**11.** The liquid crystal cured layer transfer sticker according to claim 10, wherein peeling strength A between the substrate and the liquid crystal cured layer, peeling strength B between the liquid crystal cured layer and the adhesive layer, peeling strength C between the pattern layer and the liquid crystal cured layer, and peeling strength D between the pattern layer and the adhesive layer satisfy the following (i) and (ii):

$$A < B \quad (i)$$

$$C < A \text{ and } D < A, \text{ or } C < A \text{ or } D < A \quad (ii).$$

**12.** A falsification prevention sticker for an adherend, the falsification prevention sticker comprising the liquid crystal cured layer transfer sticker according to any one of claims 1 to 11.

**13.** An authenticity determination sticker for an adherend, the authenticity determination sticker comprising the liquid crystal cured layer transfer sticker according to any one of claims 1 to 11.

**14.** A liquid crystal cured layer transferred article comprising:

an adherend; and
the liquid crystal cured layer transferred to the adherend by the liquid crystal cured layer transfer sticker according to any one of claims 1 to 11.

**15.** A method for determining authenticity of the liquid crystal cured layer transfer sticker according to any one of claims 6 to 8, the pattern layer being a layer having peelability, the liquid crystal cured layer transfer sticker further comprising an adhesive layer covering the face S2 of the liquid crystal cured layer and the pattern layer, and the substrate being a transparent substrate, the method comprising:

Step (Al) of attaching the liquid crystal cured layer transfer sticker to an adherend and peeling off the substrate from the attached liquid crystal cured layer transfer sticker to separate the liquid crystal cured layer transfer sticker into a first member including the substrate and the partial area F of the liquid crystal cured layer and a second member including the adhesive layer adhering to the adherend and an area G that is other than the partial area F of the liquid crystal cured layer;
Step (A2) of observing the area G of the second member without through the first member to acquire color information C2a of the area G;
Step (A3) of overlaying the first member on the second member such that at least a portion of the area F overlaps the area G when viewed in a thickness direction with the substrate set as an observation side and observing the area G from the substrate side of the first member to acquire color information C3a of the area G; and
Step (A4) of comparing the color information C2a of the area G acquired at Step (A2) and the color information C3a of the area G acquired at Step (A3) with each other and determining that the liquid crystal cured layer transfer sticker is authentic when there is a difference between the color information C2a and the color information C3a and determining that the liquid crystal cured layer transfer sticker is not authentic when there is no difference between the color information C2a and the color information C3a.

**16.** A method for determining authenticity of the liquid crystal cured layer transfer sticker according to claim 8, the pattern layer being a layer having peelability, the liquid crystal cured layer transfer sticker further comprising an adhesive layer covering the face S2 of the liquid crystal cured layer and the pattern layer, and the substrate being a transparent substrate, the method comprising:

Step (Al) of attaching the liquid crystal cured layer transfer sticker to an adherend and peeling off the substrate from the attached liquid crystal cured layer transfer sticker to separate the liquid crystal cured layer transfer sticker into a first member including the substrate and the partial area F of the liquid crystal cured layer and a second member including the adhesive layer adhering to the adherend and an area G that is other than the partial area F of the liquid crystal cured layer;
Step (A3) of overlaying the first member on the second member such that at least a portion of the area F overlaps

the area G when viewed in a thickness direction with the substrate set as an observation side and observing the area G from the substrate side of the first member to acquire color information C3a of the area G;
Step (A5) of overlaying the first member on the second member such that at least a portion of the area F overlaps the area G when viewed in the thickness direction with the liquid crystal cured layer set as an observation side and observing the area G from the liquid crystal cured layer side of the first member to acquire color information C5a of the area G; and
Step (A6) of comparing the color information C3a of the area G acquired at Step (A3) and the color information C5a of the area G acquired at Step (A5) with each other and determining that the liquid crystal cured layer transfer sticker is authentic when there is a difference between the color information C3a and the color information C5a and determining that the liquid crystal cured layer transfer sticker is not authentic when there is no difference between the color information C3a and the color information C5a.

**17.** A method for determining authenticity of the liquid crystal cured layer transfer sticker according to any one of claims 6 to 8, the pattern layer being a layer having adhesiveness, and the substrate being a transparent substrate, the method comprising:

Step (BI) of attaching the liquid crystal cured layer transfer sticker to an adherend and peeling off the substrate from the attached liquid crystal cured layer transfer sticker to separate the liquid crystal cured layer transfer sticker into a first member including the substrate and an area G that is other than the partial area F of the liquid crystal cured layer, and a second member including the pattern layer adhering to the adherend and the partial area F of the liquid crystal cured layer;
Step (B2) of observing the area F of the second member without through the first member to acquire color information C2b of the area F;
Step (B3) of overlaying the first member on the second member such that at least a portion of the area G overlaps the area F when viewed in a thickness direction with the substrate set as an observation side and observing the area F from the substrate side of the first member to acquire color information C3b of the area F; and
Step (B4) of comparing the color information C2b of the area F acquired at Step (B2) and the color information C3b of the area F acquired at Step (B3) with each other and determining that the liquid crystal cured layer transfer sticker is authentic when there is a difference between the color information C2b and the color information C3b and determining that the liquid crystal cured layer transfer sticker is not authentic when there is no difference between the color information C2b and the color information C3b.

**18.** A method for determining authenticity of the liquid crystal cured layer transfer sticker according to claim 8, the pattern layer being a layer having adhesiveness, and the substrate being a transparent substrate, the method comprising:

Step (BI) of attaching the liquid crystal cured layer transfer sticker to an adherend and peeling off the substrate from the attached liquid crystal cured layer transfer sticker to separate the liquid crystal cured layer transfer sticker into a first member including the substrate and an area G that is other than the partial area F of the liquid crystal cured layer, and a second member including the pattern layer adhering to the adherend and the partial area F of the liquid crystal cured layer;
Step (B3) of overlaying the first member on the second member such that at least a portion of the area G overlaps the area F when viewed in a thickness direction with the substrate set as an observation side and observing the area F from the substrate side of the first member to acquire color information C3b of the area F;
Step (B5) of overlaying the first member on the second member such that at least a portion of the area G overlaps the area F when viewed in the thickness direction with the liquid crystal cured layer set as an observation side and observing the area F from the liquid crystal cured layer side of the first member to acquire color information C5b of the area F; and
Step (B6) of comparing the color information C3b of the area F acquired at Step (B3) and the color information C5b of the area F acquired at Step (B5) with each other and determining that the liquid crystal cured layer transfer sticker is authentic when there is a difference between the color information C3b and the color information C5b and determining that the liquid crystal cured layer transfer sticker is not authentic when there is no difference between the color information C3b and the color information C5b.

FIG.1

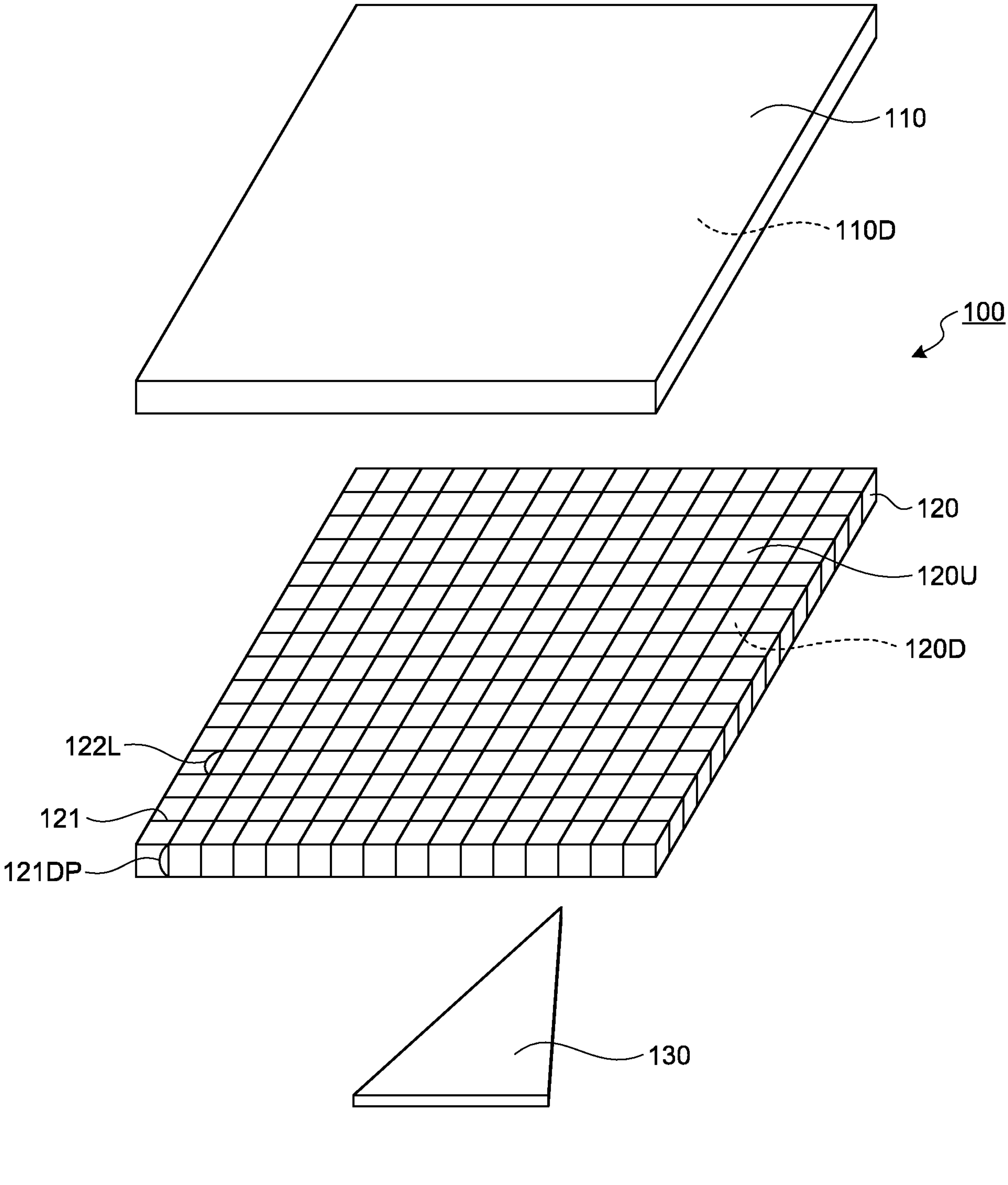

FIG.2

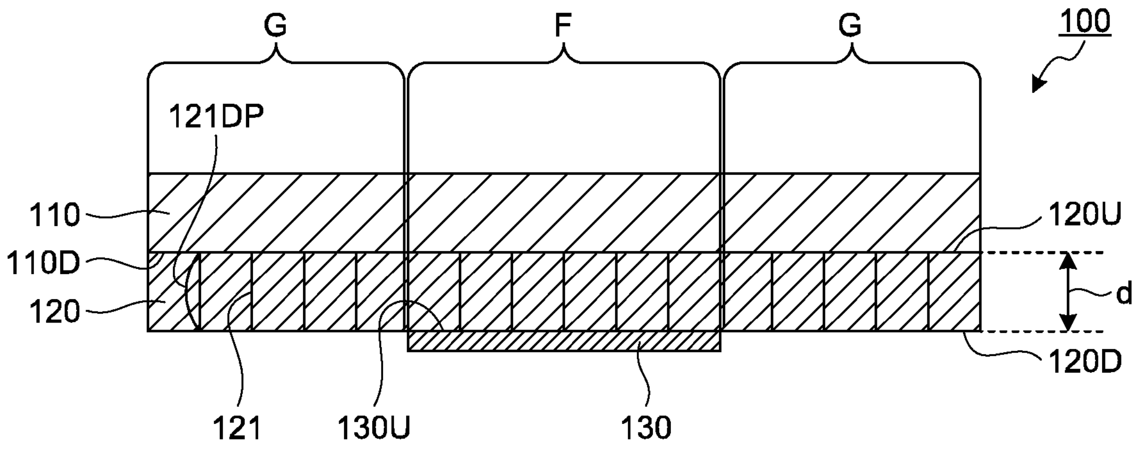


FIG.3

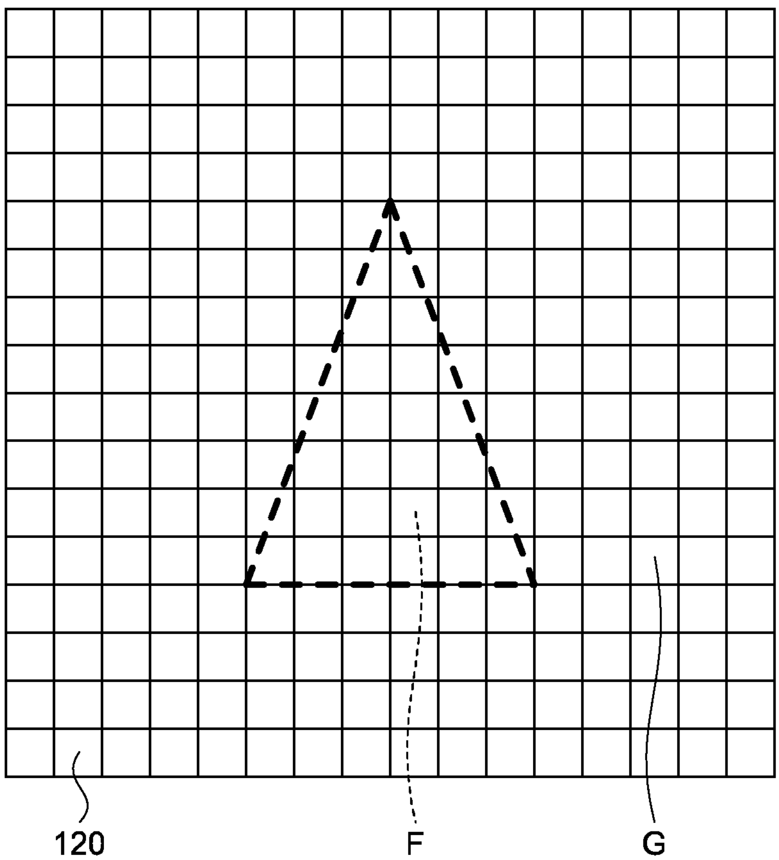

FIG.4

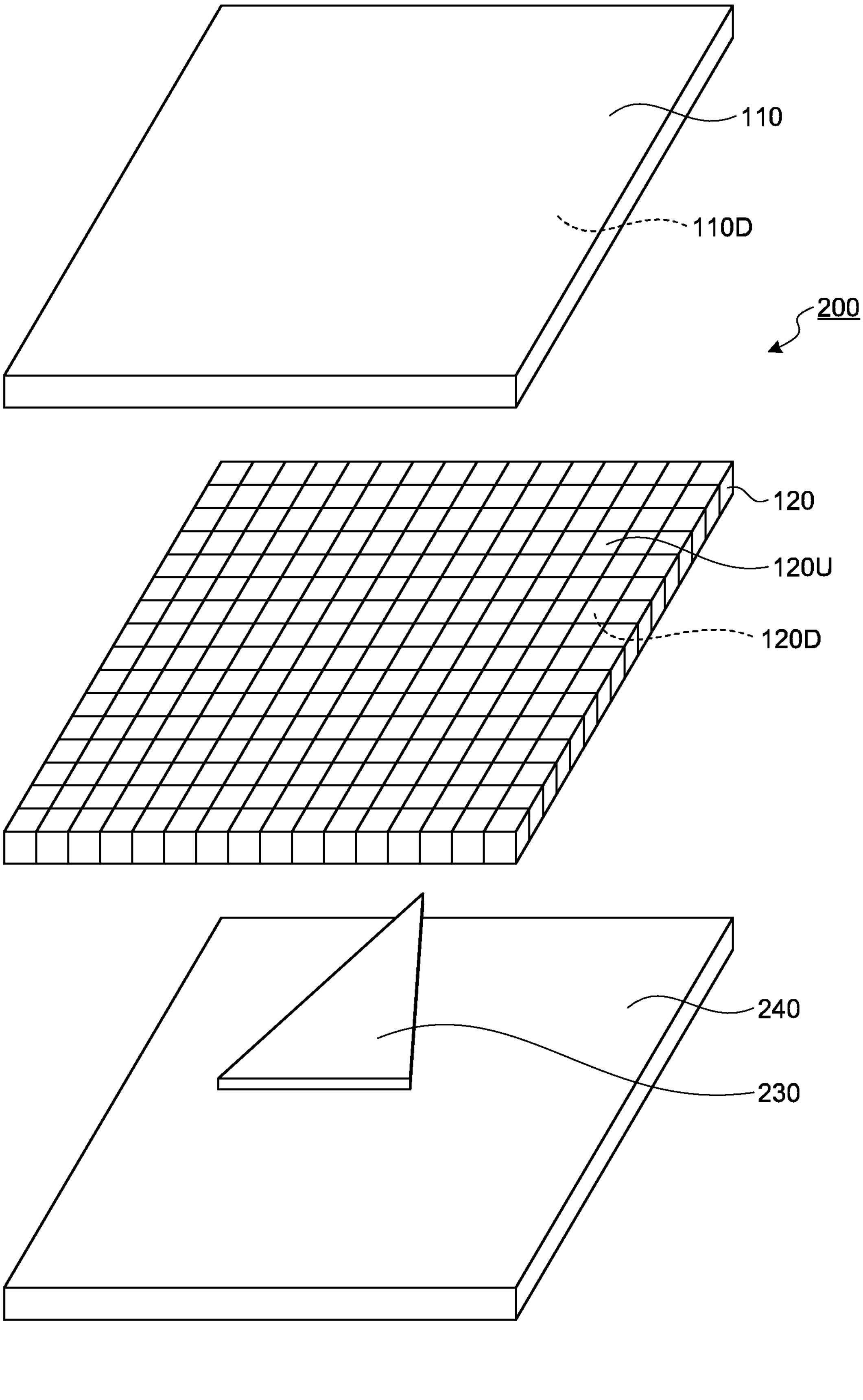

FIG.5

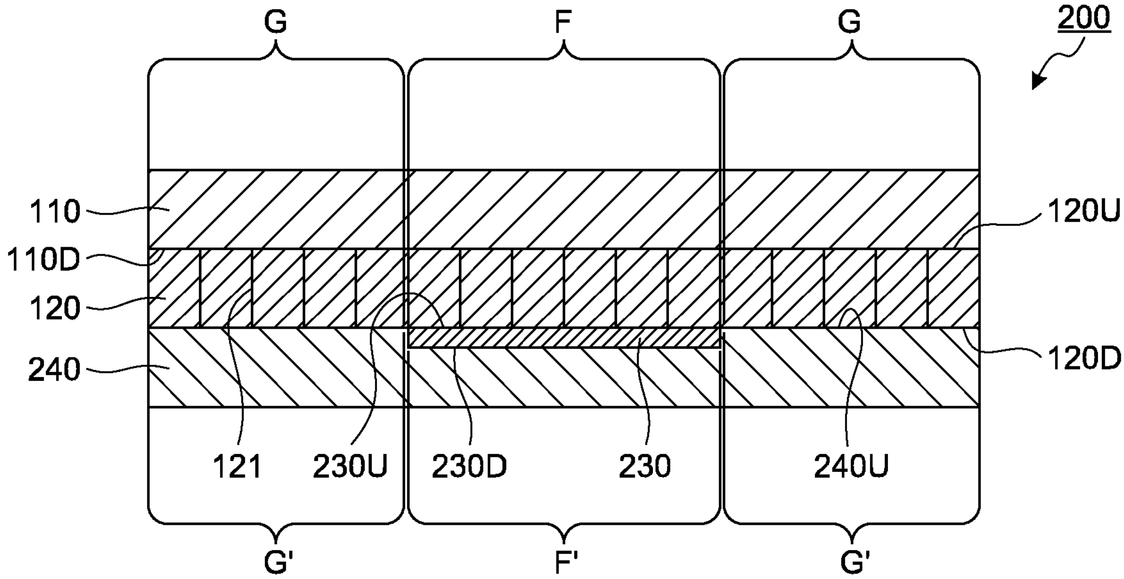
G
F
G
200
110
110D
120
240
120U
120D
121
230U
230D
230
240U
G'
F'
G'

FIG.6

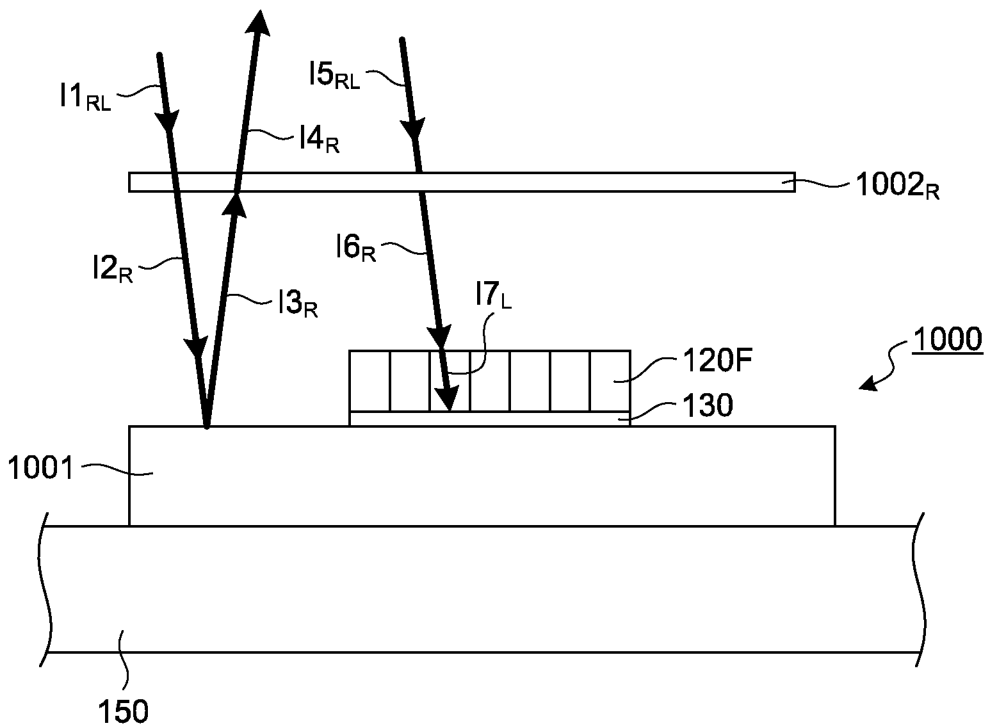
I1RL
I4R
I5RL
1002R
I2R
I3R
I6R
I7L
120F
130
1000
1001
150

FIG.7

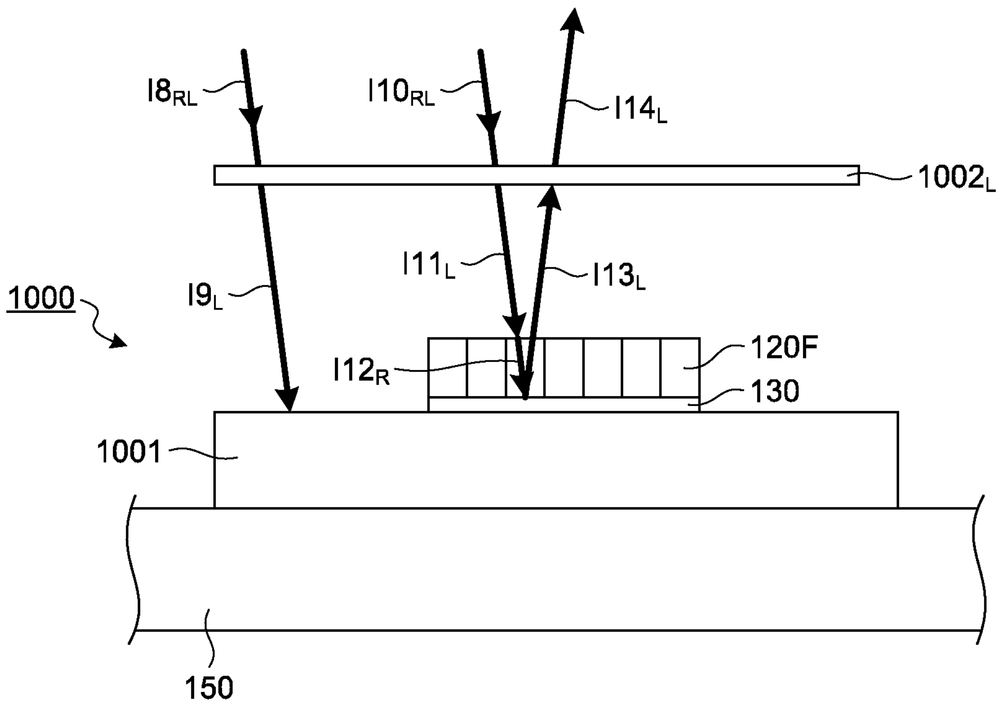
I8RL
I10RL
I14L
1002L
I11L
I13L
1000
I9L
120F
I12R
130
1001
150

FIG.8

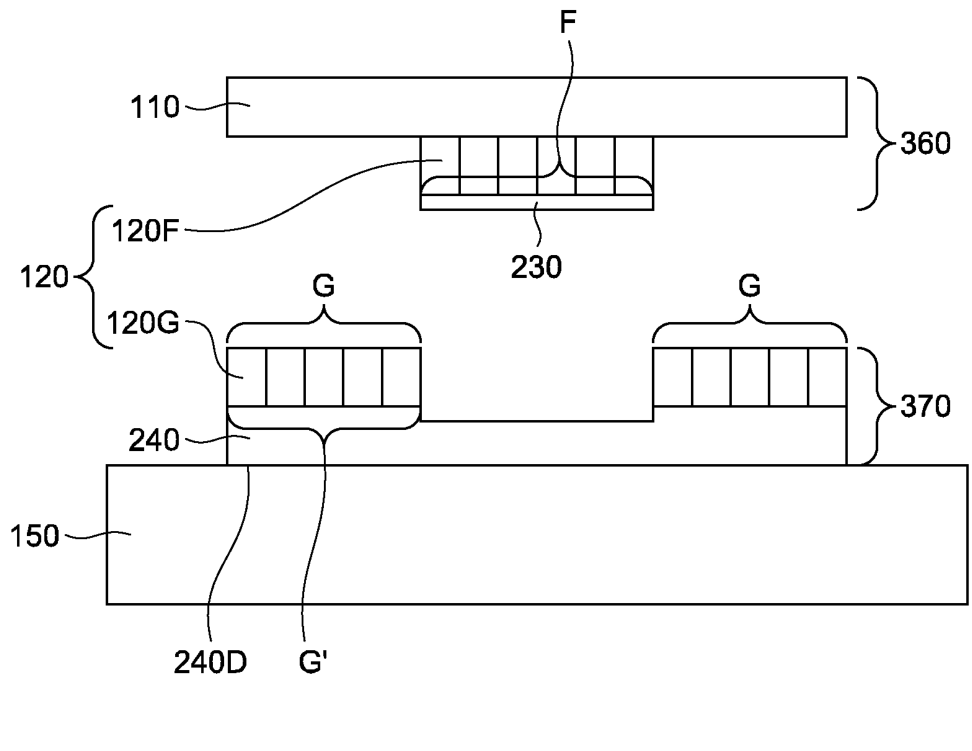
F
110
360
120F
230
120
G
G
120G
370
240
150
240D
G'

FIG.9

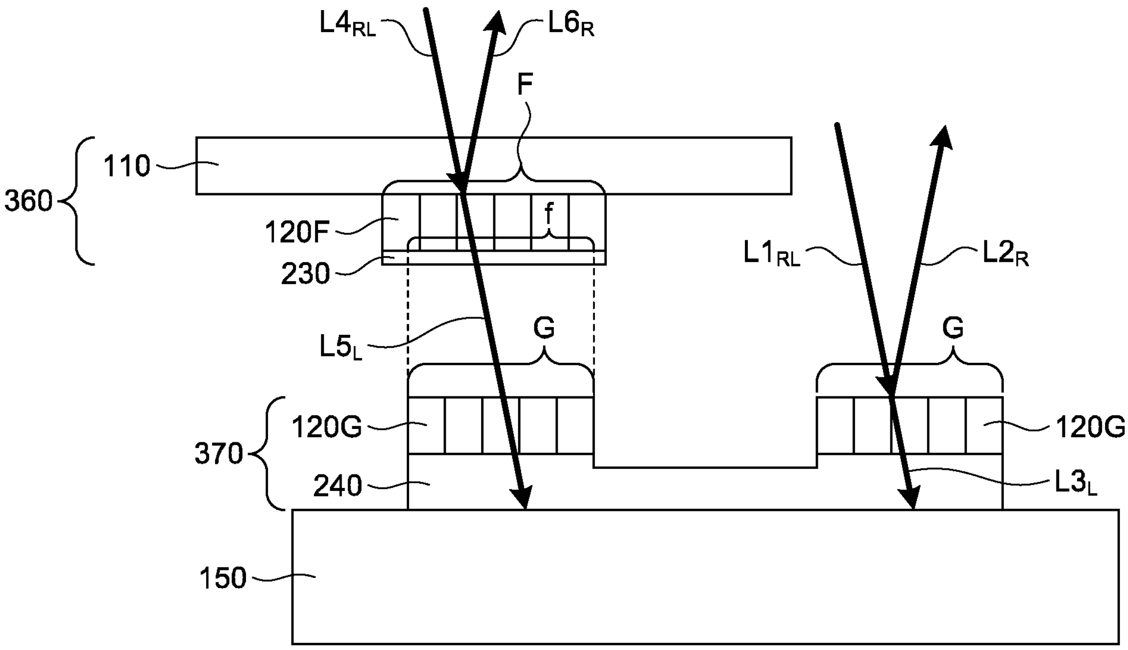
L4RL
L6R
F
360
110
120F
f
230
L1RL
L2R
L5L
G
G
370
120G
120G
240
L3L
150

FIG.10

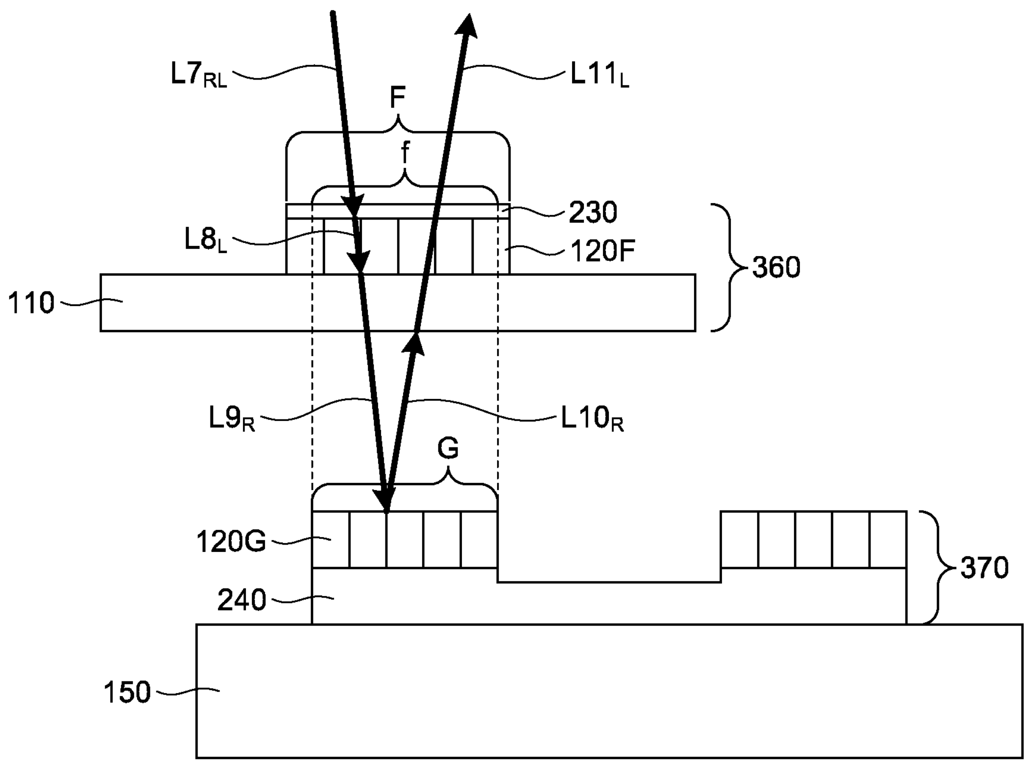
L7RL
L11L
F
f
230
L8L
120F
360
110
L9R
L10R
G
120G
370
240
150

FIG.11

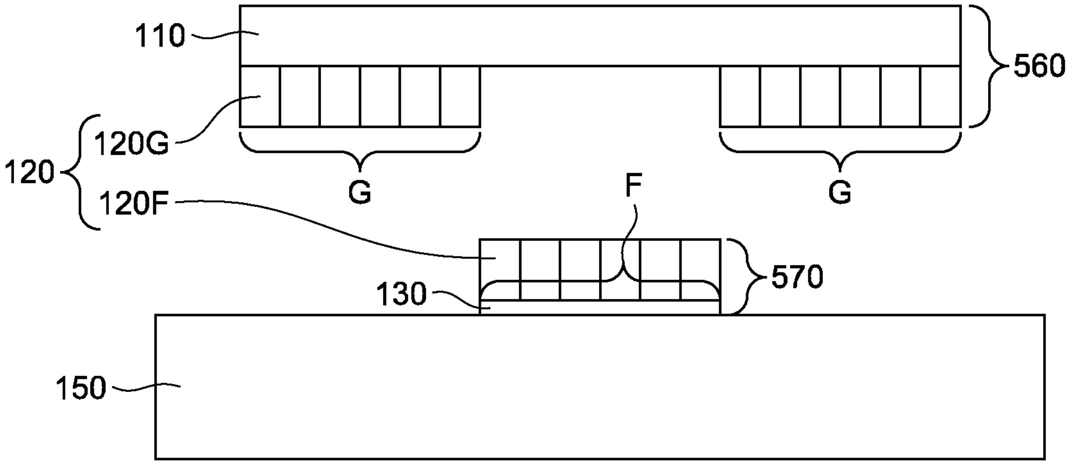
110
560
120
120G
120F
G
F
G
570
130
150

FIG.12

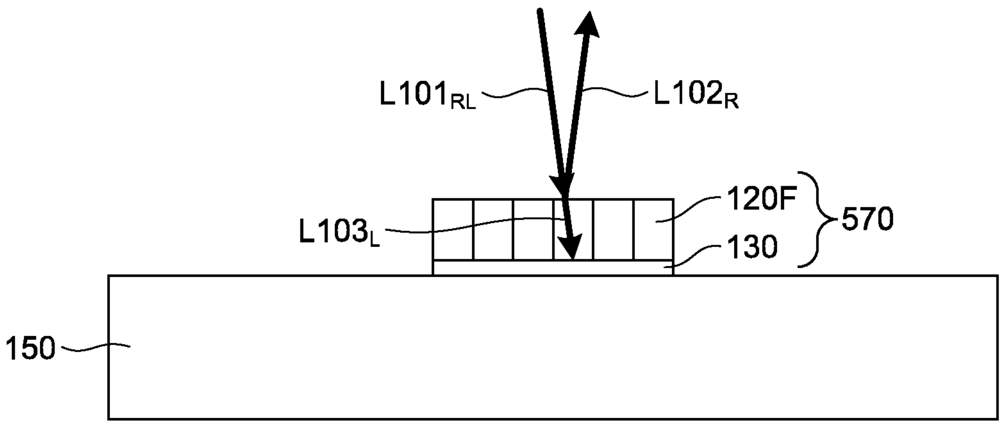
L101RL
L102R
L103L
120F
570
130
150

FIG.13

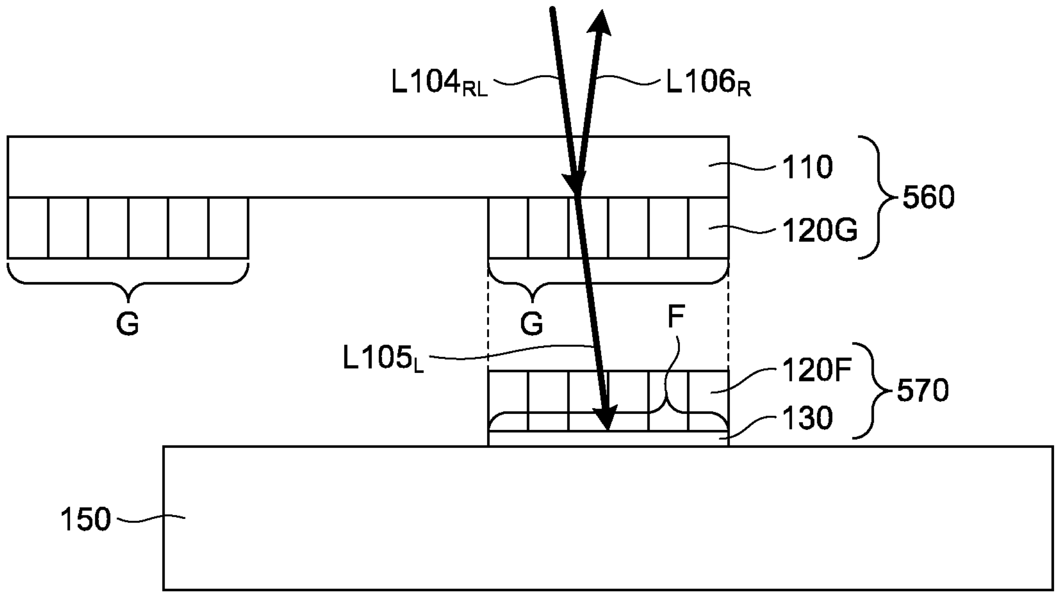
L104RL
L106R
110
560
120G
G
G
F
L105L
120F
570
130
150

FIG.14

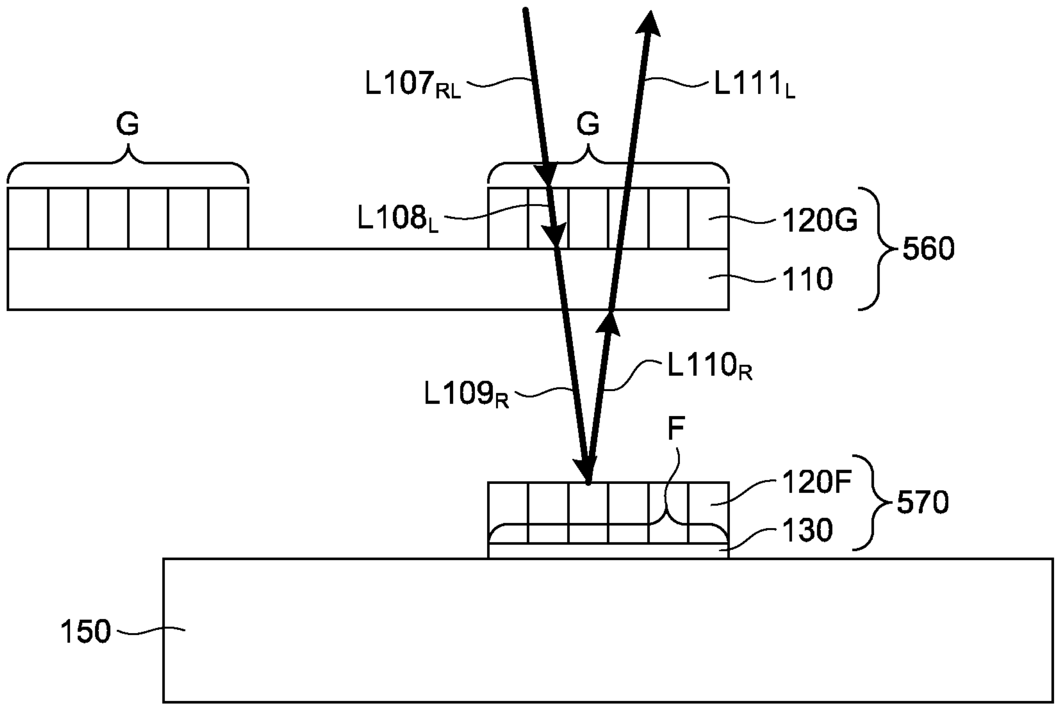
L107RL
L111L
G
G
L108L
120G
560
110
L110R
L109R
F
120F
570
130
150

**INTERNATIONAL SEARCH REPORT**

International application No.
PCT/JP2020/038865

A. CLASSIFICATION OF SUBJECT MATTER
G02B 5/30(2006.01)i; B42D 25/364(2014.01)i; B42D 25/40(2014.01)i; B32B 3/18(2006.01)i
FI: B42D25/40 100; B32B3/18; B42D25/364; G02B5/30
According to International Patent Classification (IPC) or to both national classification and IPC

B. FIELDS SEARCHED
Minimum documentation searched (classification system followed by classification symbols)
G02B5/30; B42D25/364; B42D25/40; B32B3/18

Documentation searched other than minimum documentation to the extent that such documents are included in the fields searched

| | |
|---|---|
| Published examined utility model applications of Japan | 1922-1996 |
| Published unexamined utility model applications of Japan | 1971-2020 |
| Registered utility model specifications of Japan | 1996-2020 |
| Published registered utility model applications of Japan | 1994-2020 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X | JP 2010-120230 A (DAINIPPON PRINTING CO., LTD.) 03 June 2010 (2010-06-03) paragraphs [0001], [0013], [0029], [0034]-[0091], fig. 1-3 | 1-2, 5-7, 9, 12-14 |
| A | paragraphs [0001], [0013], [0029], [0034]-[0091], fig. 1-3 | 3-4, 8, 10-11, 15-18 |
| A | JP 2011-128270 A (TOPPAN PRINTING CO., LTD.) 30 June 2011 (2011-06-30) paragraphs [0019]-[0052], fig. 1-10 | 1-18 |
| A | JP 2002-205472 A (DAINIPPON PRINTING CO., LTD.) 23 July 2002 (2002-07-23) paragraphs [0027]-[0028], fig. 5 | 1-18 |
| A | GB 2568760 A (DE LA RUE INTERNATIONAL LIMITED) 29 May 2019 (2019-05-29) page 22, line 24 to page 40, line 25, fig. 1(a)-10(c) | 1-18 |

☐ Further documents are listed in the continuation of Box C. ☒ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 03 December 2020 (03.12.2020) | 22 December 2020 (22.12.2020) |

| Name and mailing address of the ISA/ | Authorized officer |
|---|---|
| Japan Patent Office<br>3-4-3, Kasumigaseki, Chiyoda-ku,<br>Tokyo 100-8915, Japan | Telephone No. |

Form PCT/ISA/210 (second sheet) (January 2015)

**INTERNATIONAL SEARCH REPORT**
Information on patent family members

International application no.
PCT/JP2020/038865

| Patent Documents referred in the Report | Publication Date | Patent Family | Publication Date |
|---|---|---|---|
| JP 2010-120230 A | 03 Jun. 2010 | (Family: none) | |
| JP 2011-128270 A | 30 Jun. 2011 | (Family: none) | |
| JP 2002-205472 A | 23 Jul. 2002 | (Family: none) | |
| GB 2568760 A | 29 May 2019 | WO 2019/106349 A1 | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2002205472 A
- JP 2007057971 A
- JP H11513360 A
- JP 2002030042 A
- JP 2004204190 A
- JP 2005263789 A
- JP 2007119415 A
- JP 2007186430 A
- JP 2003177242 A
- JP H0850206 A
- WO 2016002765 A